# EUROPEAN PATENT SPECIFICATION

(11) **EP 4 621 663 B1**
(45) Date of publication and mention of the grant of the patent: **23.09.2026**
(21) Application number: 25158511.3
(22) Date of filing: 18.02.2025
(51) Int. Cl.: G06N 10/20, G06N 10/70

(54) **QUANTUM COMPUTATION SUPPORT PROGRAM, QUANTUM COMPUTATION SUPPORT METHOD, AND INFORMATION PROCESSING APPARATUS**
QUANTENBERECHNUNGSUNTERSTÜTZUNGSPROGRAMM, QUANTENBERECHNUNGSUNTERSTÜTZUNGSVERFAHREN UND INFORMATIONSVERARBEITUNGSVORRICHTUNG
PROGRAMME DE SUPPORT DE CALCUL QUANTIQUE, PROCÉDÉ DE SUPPORT DE CALCUL QUANTIQUE ET APPAREIL DE TRAITEMENT D'INFORMATIONS

(30) Priority: 19.03.2024 JP 2024043267
(43) Date of publication of application: 24.09.2025
(73) Proprietor: Fujitsu Limited, Kawasaki-shi, Kanagawa 211-8588 (JP)
(72) Inventor: YAMAGUCHI, Masaomi, Kawasaki-shi, Kanagawa 211-8588 (JP)
(74) Representative: Hoffmann Eitle

(56) References cited:
- US-A1- 2022 114 313
- CASEY DUCKERING: "New Abstractions for Quantum Computing", ARXIV.ORG, CORNELL UNIVERSITY LIBRARY, 201 OLIN LIBRARY CORNELL UNIVERSITY ITHACA, NY 14853, 5 March 2023 (2023-03-05), XP091453514, DOI: 10.6082/UCHICAGO.5208

## Description

### FIELD

The embodiments discussed herein are related to a quantum computation support program, a quantum computation support method, and an information processing apparatus.

### BACKGROUND

Quantum computers are capable of executing computations in parallel by using a quantum mechanical effect. Computation using the quantum mechanical effect is referred to as quantum computation. By executing quantum computation, the quantum computer is expected to exponentially improve a computation speed as compared with a classical computer (also referred to as a von Neumann computer).

Quantum computers execute quantum computation by using qubits. The qubit is a unit of information that may take a state in which a state of 10> and a state of |1> are superimposed. When measurement of the qubit is performed, the state of the qubit probabilistically changes to 10> or |1>. By measuring the state of the qubit a plurality of times, it is possible to estimate the state of the qubit before the measurement based on appearance probabilities of |0> and |1>.

With a computation system (quantum computation system) using the quantum computer, computation is advanced by changing the state of the qubit, and a computation result is obtained by performing statistical processing on measurement results of a plurality of times of computations. By operating a predetermined quantum gate, the qubit may be changed to a desired state.

An order of the quantum gates that operate on each qubit to cause the quantum computer to execute quantum computation may be modeled by a quantum circuit. The quantum computer executes a quantum gate operation on the qubit in accordance with the quantum circuit and measures a final state of the qubit. The measurement result is statistically processed by the classical computer.

When the state of the qubit is accurately changed in accordance with the quantum gate operation, a correct computation result may be obtained. However, the qubit is easily affected by noise, and an error occurs. While error correction is important, a period of ten years or more is expected to elapse before an error-correctable quantum computer is realized. Therefore, with the current technology, it is practical to effectively use a noisy intermediate scale quantum (NISQ) computer without an error correction function.

With the NISQ computers, there are many situations where it is desirable to know how correct the execution result of the quantum circuit is. Thus, for example, average fidelity of the quantum gate operation on each qubit in the quantum computer is measured. When the average fidelity of the quantum circuit in a certain execution environment is known, it is also possible to optimize the execution environment of the quantum circuit so as to improve the fidelity. For example, physical qubits may be allocated such that the overall fidelity is increased. Pulse scheduling with the highest fidelity is also possible.

As a method for determining whether or not a result obtained by executing the quantum circuit by an actual machine of the quantum computer is correct, there is a method for comparing the result with a result of quantum simulation. For example, the quantum circuit is executed by a simulator using a classical computer, and a computation result by the quantum computer is compared with a computation result by the simulator. Depending on whether or not the computation results by the comparison coincide with each other, the accuracy of the computation by the quantum computer may be estimated. However, the simulation using the classical computer may be executed only for a small-scale quantum circuit, and has a problem of scalability.

With a reversible quantum circuit, it is conceivable to add an inverse circuit that performs an inverse gate operation after the quantum circuit. In this case, it is expected that the state of each qubit after execution of the original quantum circuit and the inverse circuit returns to an input state. By repeatedly executing such quantum computation and obtaining a probability of returning to the input state, the correctness of the execution result of the quantum circuit may be evaluated.

As a technology useful for utilization of the NISQ computer, for example, a method for estimating a benchmark of a quantum gate and gate dependency of noise has been proposed. By using reversibility of a quantum algorithm, a technology of significantly reducing an error achieved by effective circuit mapping has been proposed. A technology of specifying an optimum execution schedule of a single-qubit gate in a quantum circuit has been proposed. US 2022/114313 A1 (ZHANG SHIXIN [CN] ET AL), 14 April 2022, discloses a method for determining an optimal quantum circuit through an iterative, automated process.

### Citation List

### Non-Patent Literature

Easwar Magesan, Jay M. Gambetta, and Joseph Emerson, "Characterizing quantum gates via randomized benchmarking". Physical Review A 85, 11 April 2012
Tirthak Patel and Devesh Tiwari, "Qraft: reverse your Quantum circuit and know the correct program output", ASPLOS' 21: Proceedings of the 26th ACM International Conference on Architectural Support for Programming Languages and Operating Systems, Association for Computing Machinery, New York, NY, USA, 17 April 2021, pp. 443-455
Kaitlin N. Smith, Gokul Subramanian Ravi, Prakash Murali, Jonathan M. Baker, Nathan Earnest, Ali Javadi-Cabhari, and Frederic T. Chong, "TimeStitch: Exploiting Slack to Mitigate Decoherence in Quantum Circuits", ACM Transactions on Quantum Computing, Volume 4, Issue 1, Article No. 8, 21 October 2022, pp 1-27 are disclosed as related art.

### SUMMARY OF INVENTION

### TECHNICHAL PROBLEM

With a quantum circuit capable of performing a gate operation of returning an output state after execution of the quantum circuit to an initial state, correctness of an execution result of the quantum circuit may be evaluated. However, there is a quantum circuit that is not capable of performing the gate operation of returning the state to the initial state. For example, an inverse gate operation may not be performed on an irreversible quantum circuit. With respect to a quantum circuit having a large depth, when an inverse quantum circuit is operated, the depth may exceed a limit of the depth that may be executed by the quantum computer. When the correctness of the computation result by the quantum circuit may not be evaluated, optimization of parameters set at the time of execution of the quantum circuit may not be performed, and it is difficult to improve the correctness of the execution result.

In one aspect, an object of the present disclosure is to improve correctness of an execution result of a quantum circuit in which an output state may not be returned to an initial state.

### SOLUTION TO PROBLEM

According to an aspect of the embodiments, a quantum computation support program causing a computer to execute a process includes dividing a quantum circuit to be executed by a quantum computer into a plurality of partial circuits, generating, with respect to each of the plurality of partial circuits, a sub-circuit obtained by adding, after the partial circuit, an inverse circuit that causes the quantum computer to execute an inverse arithmetic operation of an arithmetic operation of the partial circuit, setting, with respect to each of a plurality of candidate values of a parameter set for causing the quantum computer to execute the quantum circuit, the candidate value as the parameter, and causing the quantum computer to execute the sub-circuit generated from each of the plurality of partial circuits a plurality of times, and determining, based on a comparison result between an input state and an output state when the sub-circuit is executed, a value to be set as the parameter in the execution of the quantum circuit from among the plurality of candidate values.

### EFFECT OF INVENTION

According to one aspect, correctness of an execution result of a quantum circuit in which an output state may not be returned to an initial state is improved.

### BRIEF DESCRIPTION OF DRAWINGS

FIG. 1 is a diagram illustrating an example of a quantum computation support method according to a first embodiment;
FIG. 2 is a diagram illustrating an example of a configuration of a quantum computation system;
FIG. 3 is a diagram illustrating an example of hardware of devices included in the quantum computation system;
FIG. 4 is a diagram illustrating an example of a quantum circuit;
FIG. 5 is a diagram illustrating an example of a qubit in an entangled state;
FIG. 6 is a diagram illustrating an example of a quantum circuit having mid-circuit measurement;
FIG. 7 is a diagram illustrating an example of conversion processing of a native gate;
FIG. 8 is a diagram illustrating an example of qubit allocation in accordance with an actual machine constraint;
FIG. 9 is a diagram illustrating an example of a pulse schedule;
FIG. 10 is a block diagram illustrating an example of functions of a classical computer for quantum computation;
FIG. 11 is a diagram illustrating an example of a quantum circuit to be executed;
FIG. 12 is a diagram illustrating an example of a division result of the quantum circuit;
FIG. 13 is a diagram illustrating an example of optimization processing of a sub-circuit;
FIG. 14 is a diagram illustrating a first example of a sub-circuit to which an inverse circuit is added;
FIG. 15 is a diagram illustrating a second example of a sub-circuit to which an inverse circuit is added;
FIG. 16 is a diagram illustrating an example of an optimized parameter group;
FIG. 17 is a flowchart illustrating an example of a procedure of parameter optimization processing;
FIG. 18 is a flowchart illustrating an example of a procedure of sub-circuit optimization processing;
FIG. 19 is a flowchart illustrating an example of a procedure of sub-circuit optimization processing according to a third embodiment;
FIG. 20 is a flowchart illustrating an example of a procedure of random circuit selection processing;
FIG. 21 is a diagram illustrating an example of an actual machine constraint for executing a quantum circuit having mid-circuit measurement;
FIG. 22 is a diagram illustrating an example of a method for dividing a quantum circuit having mid-circuit measurement;
FIG. 23 is a diagram illustrating an example of an allocated and routed quantum circuit;
FIG. 24 is a flowchart illustrating an example of a procedure of parameter optimization processing of optimizing initial allocation and routing of a physical qubit; and
FIG. 25 is a flowchart illustrating an example of a procedure of sub-circuit execution processing.

### DESCRIPTION OF EMBODIMENTS

The present embodiments will be described below with reference to the drawings. Each of the embodiments may be implemented by combining a plurality of embodiments within a range without contradiction.

### [First Embodiment]

A first embodiment is a quantum computation support method for improving correctness of an execution result of a quantum circuit in which an output state may not be returned to an initial state.

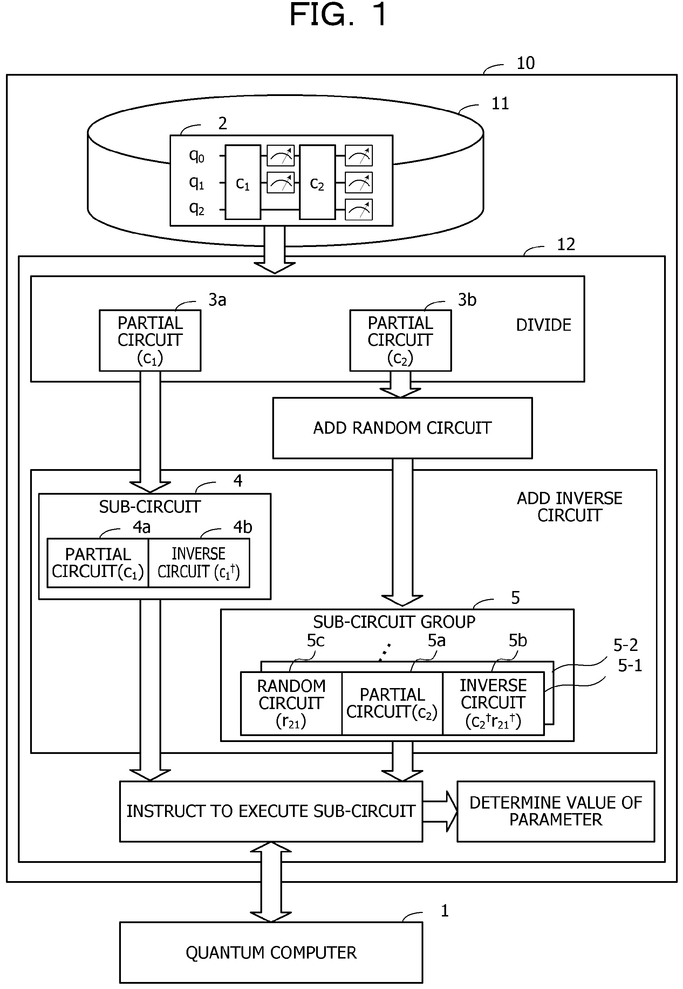

FIG. 1 is a diagram illustrating an example of the quantum computation support method according to the first embodiment. FIG. 1 illustrates an information processing apparatus 10 that executes the quantum computation support method. For example, by executing a quantum computation support program, the information processing apparatus 10 may perform the quantum computation support method.

The information processing apparatus 10 has a storage unit 11 and a processing unit 12. The storage unit 11 is, for example, a memory or a storage device included in the information processing apparatus 10. The processing unit 12 is, for example, a processor or an arithmetic operation circuit included in the information processing apparatus 10.

The storage unit 11 stores a quantum circuit 2 to be executed by a quantum computer 1. The quantum circuit 2 is a quantum circuit in which an output state may not be returned to an initial state even when an inverse gate operation is performed. For example, in the quantum circuit 2, there is mid-circuit measurement by a point other than measurement of the output state. The quantum circuit 2 having mid-circuit measurement is irreversible, and may not return the state to the initial state even when an inverse arithmetic operation of an arithmetic operation of the quantum circuit 2 is performed.

When the quantum circuit 2 is executed by the quantum computer 1, values of a plurality of parameters are set. The values of the parameters indicate, for example, execution timings for a quantum gate that has a degree of freedom within a predetermined range in the execution timing. The values of the parameters indicate an allocation pattern of physical qubits included in the quantum computer 1, to qubits included in the quantum circuit 2.

With a quantum circuit that may return the state to the initial state by an inverse circuit, it is expected that the state of the qubit is returned to the initial state by causing the quantum computer 1 to execute the inverse circuit after the quantum circuit. Consequently, correctness of an execution result of the quantum circuit may be evaluated depending on whether or not the state has returned to the initial state by the quantum computation by the quantum computer 1. On the other hand, when the state may not be returned to the initial state as in the quantum circuit 2 having mid-circuit measurement, it is not easy to evaluate the correctness of the execution result of the quantum circuit 2. With the following method, the processing unit 12 evaluates the correctness of the execution result of the quantum circuit 2 and optimizes the parameters set at the time of execution of the quantum circuit 2.

The processing unit 12 divides the quantum circuit 2 to be executed by the quantum computer 1 into a plurality of partial circuits 3a and 3b. For example, the processing unit 12 divides the quantum circuit 2 at a position of mid-circuit measurement where measurement other than the output state is performed. By performing the division at the position of the mid-circuit measurement, each of the plurality of partial circuits 3a and 3b becomes a reversible circuit.

With respect to each of the plurality of partial circuits 3a and 3b, the processing unit 12 generates sub-circuits 4, 5-1, 5-2, and ... by adding, after the partial circuit, an inverse circuit that causes the quantum computer 1 to execute an inverse arithmetic operation of the arithmetic operation of the partial circuit. With respect to the partial circuit 3a, for example, the processing unit 12 adds, after a partial circuit 4a that causes the quantum computer 1 to execute a same arithmetic operation "c₁" as that of the partial circuit 3a, an inverse circuit 4b that causes the quantum computer 1 to execute an inverse arithmetic operation "c₁^{†}" of that of the partial circuit 4a.

With respect to the partial circuit 3b of which an execution order in the quantum circuit 2 is the second or later, an inverse circuit 5b generates a plurality of sub-circuits 5-1, 5-2, and ... by using different random circuits. Consequently, a sub-circuit group 5 including the plurality of sub-circuits 5-1, 5-2, and ... is generated based on the partial circuit 3b.

For example, the processing unit 12 adds a random circuit 5c that generates a random initial state of qubits before a partial circuit 5a that causes the quantum computer 1 to execute a same arithmetic operation "c₂" as that of the partial circuit 3b. The processing unit 12 adds the inverse circuit 5b after the partial circuit 5a. The inverse circuit 5b includes a first inverse circuit added after the partial circuit 5a and a second inverse circuit added after the first inverse circuit. The first inverse circuit is a quantum circuit that causes the quantum computer 1 to execute an inverse arithmetic operation "c₂^{†}" of the arithmetic operation "c₂" of the partial circuit 3b. The second inverse circuit is a quantum circuit that causes the quantum computer 1 to execute an inverse arithmetic operation "r₂₁^{†}" of the arithmetic operation "r₂₁" of the added random circuit 5c.

With respect to each of a plurality of candidate values of the parameters to be set when the quantum computer 1 executes the quantum circuit 2, the processing unit 12 sets the candidate value as the parameter and causes the quantum computer 1 to execute the sub-circuits 4, 5-1, 5-2, and ... a plurality of times. Consequently, for each candidate value, an output state of each of the sub-circuits 4, 5-1, 5-2, and ... in a case where the candidate value is set as the parameter is obtained from the quantum computer 1.

Based on a comparison result between an input state and an output state when the sub-circuits 4, 5-1, 5-2, and ... are executed, the processing unit 12 determines a value to be set as a parameter at the time of execution of the quantum circuit 2 from among the plurality of candidate values. For example, based on a probability that the input state and the output state coincide with each other when the plurality of sub-circuits 4, 5-1, 5-2, and ... are executed for each of the plurality of candidate values, the processing unit 12 determines the value to be set as the parameter at the time of execution of the quantum circuit 2.

For example, it is assumed that the input states of the sub-circuits 4, 5-1, 5-2, and ... are such that the states of all the qubits are |0>. In this case, when there is no error in the quantum computation of each of the sub-circuits 4, 5-1, 5-2, and ..., the output state is |0 ... 0>. Therefore, the processing unit 12 determines a candidate value having a highest probability that the output state is |0 ... 0> (coincides with the input state) among the candidate values of the parameter, for example, as the value to be set as the parameter at the time of execution of the quantum circuit 2.

With the inverse circuit, each of the partial circuits 3a and 3b obtained by dividing the irreversible quantum circuit 2 may be returned to the initial state. Consequently, by using sub-circuits 4, 5-1, 5-2, and ... in which the inverse circuit is added to the partial circuits 3a and 3b, the correctness of the execution result of the quantum circuit 2 for each candidate value of the parameter may be evaluated. When the correctness may be evaluated, an optimum value of the parameter may be determined. By setting the determined value as the parameter and causing the quantum computer 1 to execute the quantum circuit 2, the correctness of the execution result is improved.

By, for example, optimizing the value of the parameter indicating an operation timing of the quantum gate, the quantum gate operation is performed at the optimum timing, errors are reduced, and the correctness (for example, average fidelity) of the execution result is improved.

There are a plurality of parameters to be set at the time of execution of the quantum circuit 2. At this time, a parameter that affects an execution result of any of the partial circuits 3a and 3b may be optimized by using a sub-circuit of the partial circuit. Therefore, the processing unit 12 determines a value to be set as a parameter used for execution of any of the partial circuits 3a and 3b based on a comparison result between an input state and an output state when a sub-circuit generated from the partial circuit is executed. For example, the processing unit 12 determines the value to be set as the parameter used for execution of the partial circuit 3a based on a comparison result between an input state and an output state when the sub-circuit 4 is executed. Based on the comparison result between the input state and the output state when the sub-circuits 5-1 and 5-2 are executed, the processing unit 12 determines the value to be set as the parameter used for the execution of the partial circuit 3b. With this, the optimization of the value of the parameter may be efficiently performed.

With respect to the partial circuit 3b of which the execution order in the quantum circuit 2 is the second or later, the input state when the partial circuit 3b is executed in the quantum circuit 2 depends on the execution result of the partial circuit 3a executed first. With respect to a random circuit that generates a distribution deviating from the distribution of the output states indicated by the execution result of the partial circuit 3a executed first, the processing unit 12 restricts the use of the random circuit when the sub-circuits 5-1, 5-2, and ... of the partial circuit 3b are generated. The distribution of the output states is an appearance probability of each of the states "|0 ... 0>, |0 ... 1>, ..., and |1 ... 1>" that may be the output states.

For example, the processing unit 12 instructs the quantum computer 1 to execute the quantum circuit 2 a plurality of times up to a third partial circuit of which the execution order in the quantum circuit 2 is an i-th (i is a natural number). The processing unit 12 acquires the distribution of the output states by the plurality of times of executions. When generating the plurality of sub-circuits 5-1, 5-2, and ... of a fourth partial circuit of which the execution order in the quantum circuit 2 is an (i + 1)th, the processing unit 12 performs the following processing.

By comparing the distribution of the appearance probabilities of the initial states obtained by the generated random circuit with the acquired distribution of the appearance probabilities of the output states, the processing unit 12 determines whether or not to adopt the generated random circuit based on the comparison result. When, for example, a degree of similarity between the distribution of the appearance probabilities of the initial states and the distribution of the appearance probabilities of the output states is greater than or equal to a predetermined value, the processing unit 12 determines to adopt the generated random circuit. When it is determined to adopt the generated random circuit, the processing unit 12 generates a sub-circuit to which the generated random circuit is added, and when it is determined not to adopt the generated random circuit, the processing unit 12 discards the generated random circuit.

Consequently, for example, for the sub-circuit group 5 of the partial circuit 3b, the sub-circuits 5-1, 5-2, and ... are generated by using a random circuit that generates input states having a distribution close to the distribution of the appearance probabilities of the output states of the partial circuit 3a. Consequently, the state of each of the qubits when the sub-circuits 5-1, 5-2, and ... are executed approximates to the state when the partial circuit 3b is executed in the execution process of the quantum circuit 2. Consequently, the value of the parameter may be optimized in a state close to the state at the time of execution of the quantum circuit 2, and the accuracy of the optimization is improved.

Some parameters, such as allocation of physical qubits, affect the entire quantum circuit 2. With respect to such a parameter, the processing unit 12 may evaluate the candidate value of the parameter by performing statistical processing of integrating the execution results of each of the sub-circuits 5-1, 5-2, and ....

For example, the processing unit 12 generates a plurality of combination patterns (for example, allocation patterns of the physical qubits) in which candidate values for each of a plurality of parameters to be set at the time of execution of the quantum circuit 2 are combined. By using the plurality of parameters to which the candidate values indicated in the combination pattern are set for each of the plurality of combination patterns, the processing unit 12 causes the quantum computer 1 to execute the sub-circuits 4, 5-1, 5-2, and ... of each of the plurality of partial circuits 3a and 3b a plurality of times. Based on the comparison result between the input state and the output state when the plurality of sub-circuits are executed for each of the plurality of combination patterns, the processing unit 12 determines a combination pattern indicating values to be set as the parameters at the time of execution of the quantum circuit 2 from among the plurality of combination patterns.

By doing so, the value of the parameter that affects the entire quantum circuit 2 may also be optimized by using the sub-circuits 4, 5-1, 5-2, and ... for each divided partial circuit. Consequently, the quantum computer 1 may be caused to execute the quantum circuit 2 by using the parameter having the optimized value, and the correctness of the execution result of the quantum circuit 2 is improved.

### [Second Embodiment]

With respect to a quantum circuit having mid-circuit measurement, the quantum computation system optimizes a parameter by using a statistical value of an all-zero sequence as an objective function. Optimization of the parameter using the statistical value of the all-zero sequence as the objective function is to optimize the parameter by determining, as an optimum value, a value of the parameter at which a probability that the output states of all qubits are |0> is maximized.

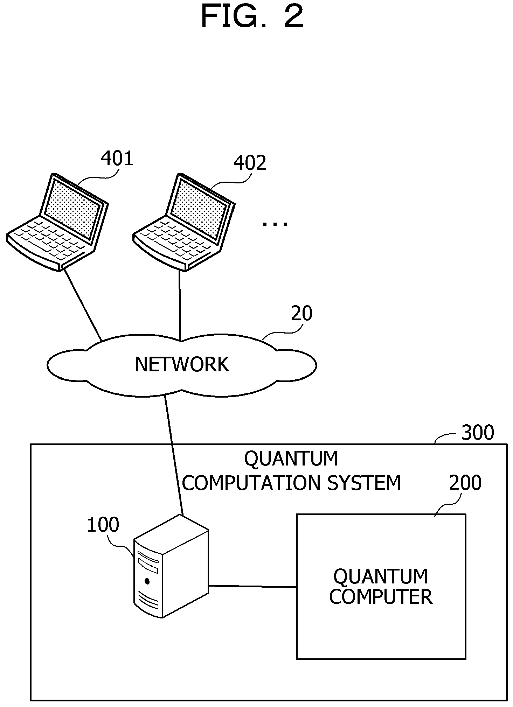

FIG. 2 is a diagram illustrating an example of a configuration of a quantum computation system. A quantum computation system 300 is a computer system using a quantum device. The quantum computation system 300 has a classical computer 100 and a quantum computer 200. Terminal devices 401, 402, and ... are coupled to the classical computer 100 via a network 20. The terminal devices 401, 402, and ... are computers used by users who request quantum computation by the quantum computation system 300. The classical computer 100 accepts a computation request including a quantum circuit from the terminal devices 401, 402, and .... The quantum circuit indicates an order of operations on qubits by arrangement of elements such as quantum gates. The qubit is a bit capable of representing a state in which a state of "0" and a state of "1" are superimposed.

In accordance with the quantum circuits accepted from the terminal devices 401, 402, and ..., the classical computer 100 instructs the quantum computer 200 to execute quantum computation. The classical computer 100 acquires a measurement result of each qubit from the quantum computer 200.

The quantum computer 200 has a plurality of qubits and a device for operating each of the plurality of qubits. The plurality of qubits included in the quantum computer 200 may be realized by, for example, a superconducting method, an ion trap method, a diamond spin method, or the like.

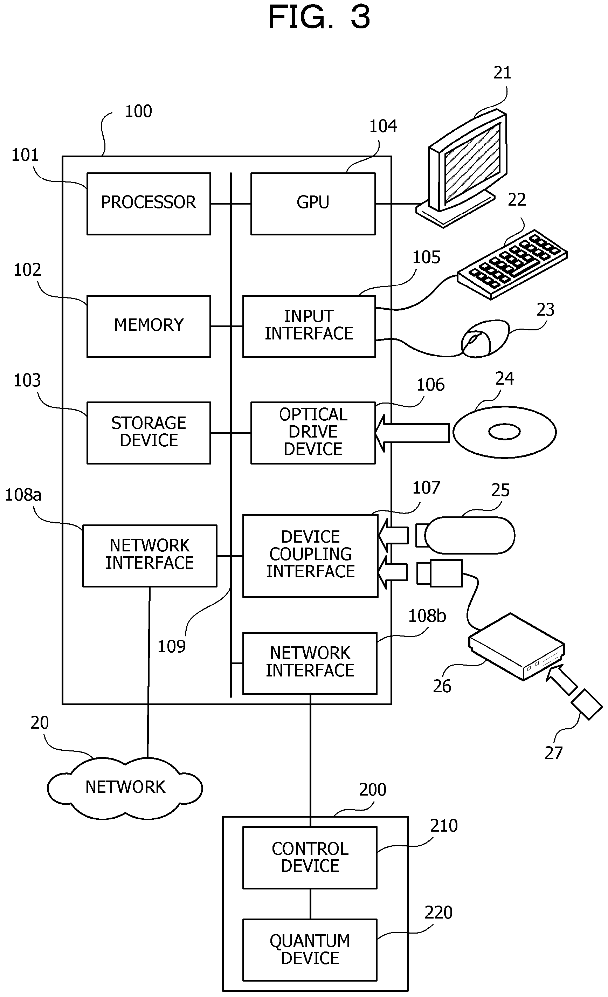

FIG. 3 is a diagram illustrating an example of hardware of devices configuring the quantum computation system. The entirety device of the classical computer 100 is controlled by a processor 101. A memory 102 and a plurality of peripheral devices are coupled to the processor 101 via a bus 109. The processor 101 may be a multiprocessor. The processor 101 is, for example, a central processing unit (CPU), a microprocessor unit (MPU), or a digital signal processor (DSP). At least a part of a function realized by the processor 101 executing a program may be realized by an electronic circuit such as an application-specific integrated circuit (ASIC), and a programmable logic device (PLD).

The memory 102 is used as a main storage device of the classical computer 100. The memory 102 temporarily stores at least a part of an operating system (OS) program or an application program to be executed by the processor 101. The memory 102 stores various types of data to be used for processing by the processor 101. As the memory 102, for example, a volatile semiconductor storage device such as a random-access memory (RAM) is used.

The peripheral devices coupled to the bus 109 include a storage device 103, a graphics processing unit (GPU) 104, an input interface 105, an optical drive device 106, a device coupling interface 107, and network interfaces 108a and 108b.

The storage device 103 writes and reads data electrically or magnetically to and from a built-in recording medium. The storage device 103 is used as an auxiliary storage device of the classical computer 100. The storage device 103 stores an OS program, an application program, and various types of data. As the storage device 103, for example, a hard disk drive (HDD) or a solid-state drive (SSD) may be used.

The GPU 104 is an arithmetic device that performs image processing. The GPU 104 is an example of a graphic controller. A monitor 21 is coupled to the GPU 104. The GPU 104 displays images on a screen of the monitor 21 in accordance with an instruction from the processor 101. As the monitor 21, a display device using organic electro luminescence (EL), a liquid crystal display device, or the like is used.

A keyboard 22 and a mouse 23 are coupled to the input interface 105. The input interface 105 transmits to the processor 101 signals transmitted from the keyboard 22 and the mouse 23. The mouse 23 is an example of a pointing device, and other pointing devices may be used. Examples of the other pointing devices include a touch panel, a tablet, a touch pad, a track ball, or the like.

The optical drive device 106 reads data recorded in an optical disc 24 or writes data to the optical disc 24 by using laser light or the like. The optical disc 24 is a portable-type recording medium in which data is recorded such that the data is readable by reflection of light. Examples of the optical disc 24 include a Digital Versatile Disc (DVD), a DVD-RAM, a compact disc read-only memory (CD-ROM), a CD-recordable (CD-R), a CD-rewritable (CD-RW), and the like.

The device coupling interface 107 is a communication interface for coupling the peripheral devices to the classical computer 100. For example, a memory device 25 and a memory reader and writer 26 may be coupled to the device coupling interface 107. The memory device 25 is a recording medium equipped with a function of communicating with the device coupling interface 107. The memory reader and writer 26 is a device that writes data to a memory card 27 or reads data from the memory card 27. The memory card 27 is a card-type recording medium.

The network interface 108a is coupled to the network 20. The network interface 108a transmits and receives data to and from another computer or a communication device via the network 20. The network interface 108a is, for example, a wired communication interface that is coupled to a wired communication device such as a switch or a router by a cable. The network interface 108a may be a wireless communication interface that is coupled, by radio waves, to and communicates with a wireless communication device such as a base station or an access point.

The network interface 108b is an interface for coupling to the quantum computer 200. The processor 101 transmits a quantum circuit to the quantum computer 200 via the network interface 108b and causes the quantum computer 200 to execute quantum computation. The processor 101 acquires a result of the quantum computation via the network interface 108b.

With the hardware as described above, the classical computer 100 may realize processing functions of a second embodiment. The device described in the first embodiment may also be realized by the same hardware as the classical computer 100 illustrated in FIG. 3.

For example, the classical computer 100 realizes the processing functions of the second embodiment by executing a program recorded in a computer-readable recording medium. The program in which a content of processing to be executed by the classical computer 100 is described may be recorded in any of various recording media. For example, the program to be executed by the classical computer 100 may be stored in the storage device 103. The processor 101 loads at least a part of the program in the storage device 103 to the memory 102, and executes the program. The program to be executed by the classical computer 100 may be recorded in a portable-type recording medium such as the optical disc 24, the memory device 25, or the memory card 27. For example, the program stored in a portable-type recording medium may be executed after being installed in the storage device 103 by the control from the processor 101. The processor 101 may read the program directly from the portable-type recording medium and execute the program.

The quantum computer 200 has a control device 210 and a quantum device 220. The control device 210 executes a gate operation on a qubit in the quantum device according to a quantum circuit. The quantum device 220 has a plurality of qubits. The quantum device 220 is, for example, one or a plurality of quantum processing units (QPUs).

A quantum circuit executable by the quantum computer 200 will be described next. In the quantum circuit, an operation to be operated on a qubit is represented by an array of quantum gates.

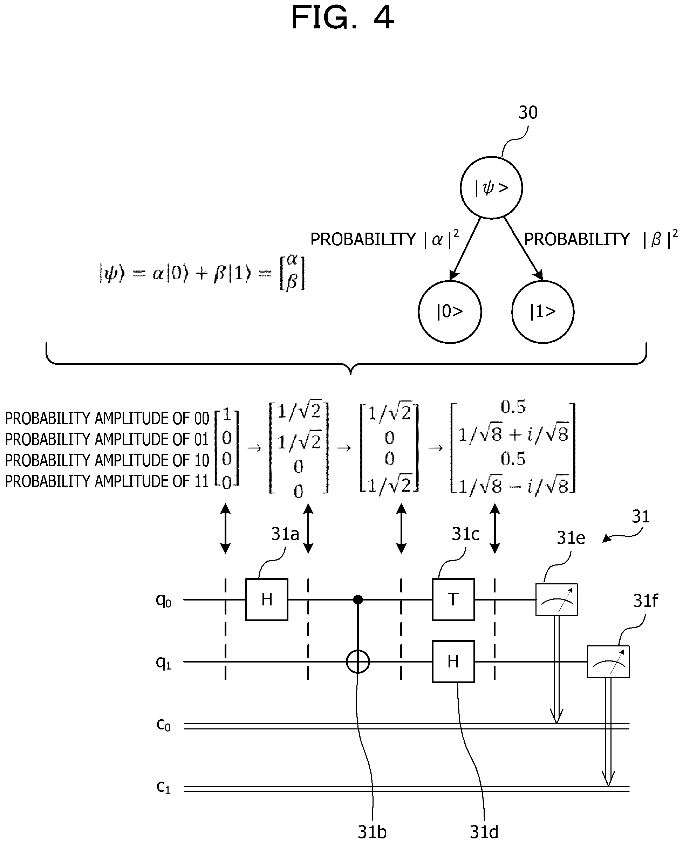

FIG. 4 is a diagram illustrating an example of the quantum circuit. Unlike a classical bit that is in only a state of "0" or "1", a qubit 30 may be in a superposition state |ψ> of "0" and "1". The superposition state |ψ> is represented by the following expression.$\left|ψ\right〉 = α \left|0\right〉 + β \left|1\right〉 = \left[\begin{matrix}α \\ β\end{matrix}\right]$

α is a probability amplitude indicating a probability that the state of the qubit 30 is |0>. |α|² is a probability that the state is |0>. β is a probability amplitude indicating a probability that the state of the qubit 30 is |1>. |β|² is a probability that the state is |1>.

The quantum computation is advanced by changing the state of the qubit 30. When the state of the qubit 30 is measured, the value of |0> or |1> is probabilistically obtained according to the state. By performing statistical processing on the measurement results measured by repeatedly executing the quantum computation, the quantum computation system 300 obtains a computation result of the quantum computation.

Procedures of the gate operation and the measurement in the quantum computation may be modeled by a quantum circuit 31. The quantum circuit 31 represents quantum computation using two qubits q₀ and q₁. The states of the two qubits may be represented by a column vector. For example, it is assumed that initial states of the two qubits are both |0>. In this case, the states of the qubits are represented by Expression (2).$\left[\begin{matrix}1 \\ 0 \\ 0 \\ 0\end{matrix}\right]$

A first element of Expression (2) is a probability amplitude indicating that the states of the two qubits q₀ and q₁ are both |0>. A second element is a probability amplitude indicating that the state of the first qubit q₀ is |0> and the state of the second qubit q₁ is |1>. A third element is a probability amplitude indicating that the state of the first qubit q₀ is |1> and the state of the second qubit q₁ is |0>. A fourth element is a probability amplitude indicating that the states of the two qubits q₀ and q₁ are both |1>.

In the quantum circuit 31, first, a Hadamard gate 31a is disposed in the first qubit q₀. When a gate operation of the Hadamard gate 31a is performed, the states of the two qubits q₀ and q₁ are changed as in Expression (3).$\left[\begin{matrix}\frac{1}{\sqrt{2}} \\ \frac{1}{\sqrt{2}} \\ 0 \\ 0\end{matrix}\right]$

Next, in the quantum circuit 31, a CNOT gate 31b in which the first qubit q₀ is a control qubit and the second qubit q₁ is a target qubit is disposed. When a gate operation of the CNOT gate 31b is performed, the states of the two qubits q₀ and q₁ are changed as in Expression (4).$\left[\begin{matrix}\frac{1}{\sqrt{2}} \\ 0 \\ 0 \\ \frac{1}{\sqrt{2}}\end{matrix}\right]$

Next, in the quantum circuit 31, a T-gate 31c is disposed in the first qubit q₀, and a Hadamard gate 31d is disposed in the second qubit q₁. When the gate operations of these gates are performed, the states of the two qubits q₀ and q₁ are changed as in Expression (5).$\left[\begin{matrix}0.5 \\ \frac{1}{\sqrt{8}} + \frac{i}{\sqrt{8}} \\ 0.5 \\ \frac{1}{\sqrt{8}} - \frac{i}{\sqrt{8}}\end{matrix}\right]$

Finally, operations of measurements 31e and 31f of the states of the two qubits q₀ and q₁ are indicated in the quantum circuit 31. The measurement results of the states of the qubits q₀ and q₁ are probabilistically |0> or |1>. The measurement results are stored as "0" or "1" in the classical bits c₀ and c₁. By repeating the quantum computation and the measurement based on the quantum circuit 31 many times, the quantum computer 200 estimates the values of |α|² and |β|².

According to such a quantum circuit 31, the gate operation and the measurement are performed on the qubits q₀ and q₁. There is a correlation between the two qubits q₀ and q₁ in an entangled state (quantum-entangled state).

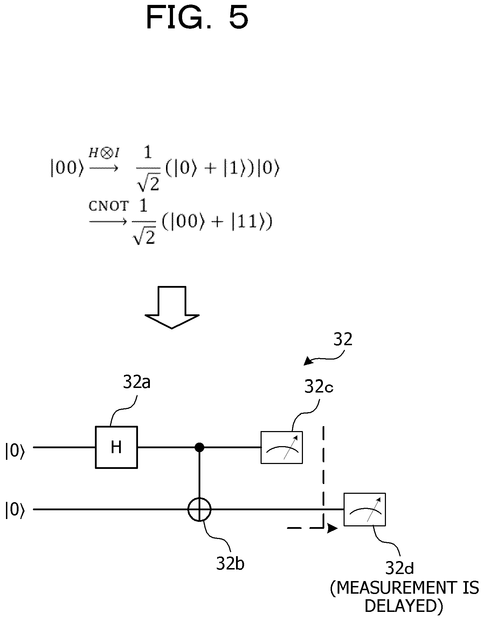

FIG. 5 is a diagram illustrating an example of the qubits in the entangled state. In a quantum circuit 32, a Hadamard gate 32a is disposed in the first qubit. After that, a CNOT gate 32b in which the first qubit is a control qubit and the second qubit is a target qubit is disposed. Operations of measurements 32c and 32d of the states of the two qubits are indicated. The measurement 32d is assumed to be performed after the measurement 32c.

An input state to the quantum circuit 32 is |00> (two qubits are both |0>). At this time, the quantum computation executed by the quantum circuit 32 is represented by Expression (6) below.$\begin{matrix}\left|00\right〉 {\to }^{H ⊗ I} \frac{1}{\sqrt{2}} \left(\left|0\right〉+\left|1\right〉\right) \left|0\right〉 \\ {\to }^{CNOT} \frac{1}{\sqrt{2}} \left(\left|00\right〉+\left|11\right〉\right)\end{matrix}$

In the quantum computer 200, a gate operation is executed in accordance with the quantum circuit 32. By the measurement 32c, |0> or |1> is observed in the first qubit. When the first qubit is |0>, the second qubit changes to |0> before the measurement 32d. When the first qubit is |1>, the second qubit changes to |1> before the measurement 32d. When a state of one qubit is determined in this manner, a state of the other qubit is also determined. The states of the two qubits having such a correlation is the entangled state.

Some quantum circuits have mid-circuit measurement. With a quantum circuit having mid-circuit measurement, measurement is performed while the circuit is being executed, and the subsequent circuits are executed after the measurement. The measurement result of the mid-circuit measurement may be used for subsequent processing. For example, the quantum computation may be reset in accordance with a state of a specific qubit measured in the mid-circuit measurement. Depending on the measurement result of the mid-circuit measurement, a quantum gate to be executed thereafter may be switched.

A quantum circuit without mid-circuit measurement is reversible, and an inverse circuit that performs an inverse gate operation of the quantum circuit may be generated. Such a quantum circuit may be referred to as having reversibility. On the other hand, the quantum circuit having mid-circuit measurement does not have reversibility (irreversible).

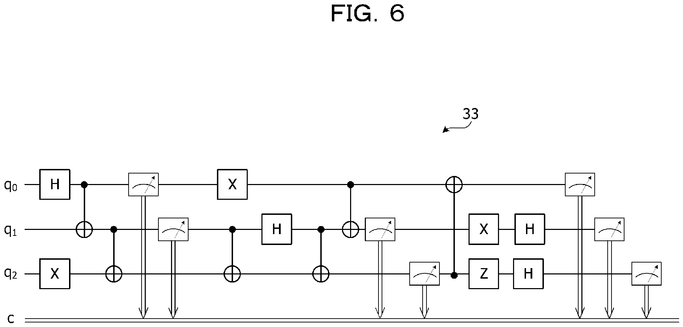

FIG. 6 is a diagram illustrating an example of the quantum circuit having mid-circuit measurement. In a quantum circuit 33, measurements at two points are indicated in addition to the measurement of the output state. When, for example, mid-circuit measurement of one of the two qubits in the entangled state is performed in the quantum circuit 33 having mid-circuit measurement, the state of the qubit is determined to |0> or |1>, and at the same time, the state of the other qubit is also determined. In such a case, even when an inverse circuit that executes a plurality of gate operations of the quantum circuit 33 in an inverse order is executed after the quantum circuit 33 (before last measurement), the state of the qubit is not expected to return to the initial state. For example, the quantum circuit 33 does not have reversibility.

With respect to the irreversible quantum circuit 33 having no reversibility, an execution environment may not be optimized by using the reversibility. Parameters targeted for the optimization of the execution environment include, for example, a parameter indicating an allocation relationship of physical qubits to qubits of a quantum circuit. When the allocation of the physical qubits is inappropriate, for example, gate operations of many swap gates are wastefully performed at the time of execution, and a probability of error occurrence increases.

The allocation of the physical qubits is performed, for example, when the quantum circuit is compiled in the classical computer 100. With the compiling of the quantum circuit, first, a quantum gate in the quantum circuit is converted into a quantum gate (native gate) executable by the quantum computer 200.

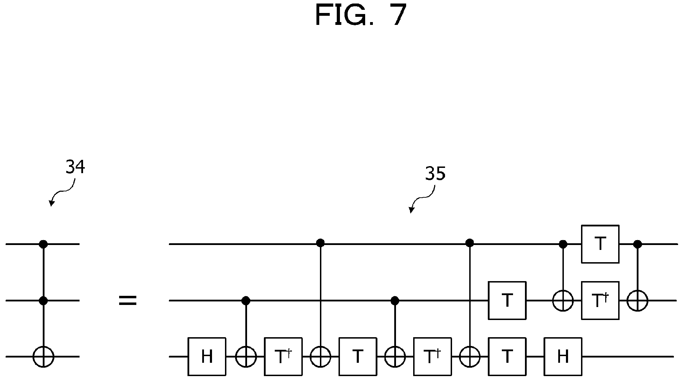

FIG. 7 is a diagram illustrating an example of conversion processing of a native gate. The native gate is a one-qubit gate or a two-qubit gate. For example, a Toffoli gate 34 is a three-qubit gate and is not a native gate. Consequently, in the compiling, the Toffoli gate 34 is converted into an equivalent circuit 35 in which a plurality of native gates are combined.

Even when the quantum circuit is configured by only native gates, the quantum circuit may not be executed as it is due to a hardware constraint (actual machine constraint) of the quantum computer 200. For example, among quantum gates, there is a quantum gate that may be executed only by a specific qubit. For example, the gate operation of the two-qubit gate may be executed only on a pair of qubits coupled to each other.

Constraint conditions for enabling the quantum circuit to be executed by the quantum computer 200 are that the quantum gate included in the quantum circuit is a native gate, and that a physical qubit in an actual machine, which is an operation target of the quantum gate, satisfies an actual machine constraint.

With a simple quantum circuit, it is possible to satisfy the actual machine constraint by allocating an appropriate physical qubit to each input qubit as a physical qubit that executes a gate operation on the input qubit indicated by the quantum circuit.

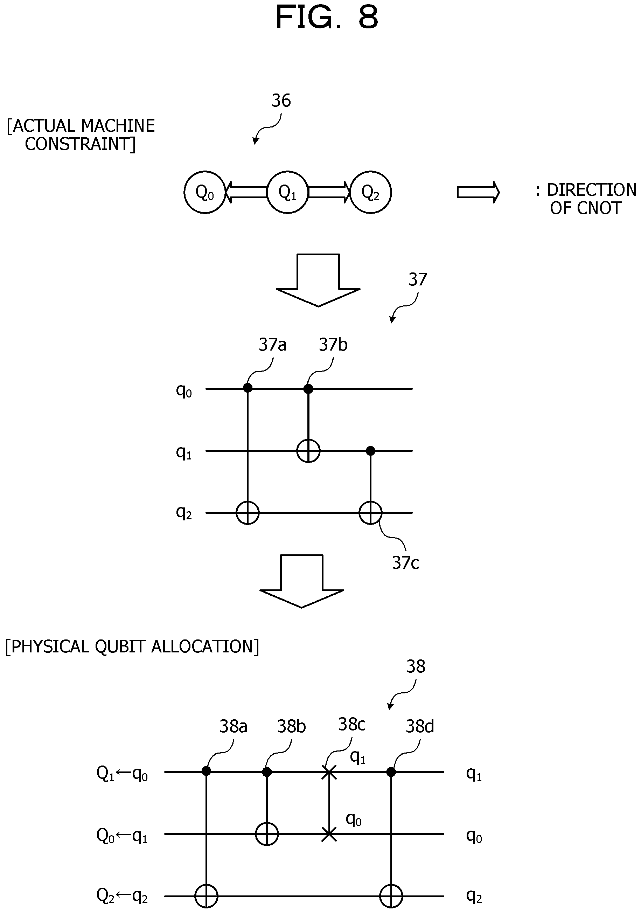

FIG. 8 is a diagram illustrating an example of qubit allocation according to the actual machine constraint. For example, the actual machine constraint is represented by a directed graph 36. Nodes of the directed graph 36 correspond to physical qubits, and arrows coupling the nodes indicate pairs of physical qubits that may execute a CNOT gate operation. A source of the arrow is a control qubit, and a destination of the arrow is a target qubit. The directed graph 36 indicates that a CNOT gate operation in which a physical qubit Q₁ is a control qubit and a physical qubit Q₀ is a target qubit is possible. The directed graph 36 also indicates that a CNOT gate operation in which a physical qubit Q₁ is a control qubit and a physical qubit Q₂ is a target qubit is possible. The CNOT gate operation is not executable between the other physical qubits.

A case where a quantum circuit 37 is executed under such an actual machine constraint is assumed. Three qubits q₀, q₁, and q₂ are indicated in the quantum circuit 37. A first quantum gate 37a is a CNOT gate in which a qubit q₀ is a control qubit and a qubit q₂ is a target qubit. A second quantum gate 37b is a CNOT gate in which a qubit q₀ is a control qubit and a qubit q₁ is a target qubit. A third quantum gate 37c is a CNOT gate in which a qubit q₁ is a control qubit and a qubit q₂ is a target qubit.

With the actual machine constraint, the physical qubit that may be used as the control qubit is only the physical qubit Q₁. Consequently, with the quantum circuit 37 as it is, the quantum circuit 37 may not be executed regardless of how the physical qubits Q₀, Q₁, and Q₂ are allocated to the three qubits q₀, q₁, and q₂.

At the time of compiling, the quantum circuit 37 is converted into a quantum circuit 38. First two quantum gates 38a and 38b of the quantum circuit 38 are the same as the first two quantum gates 37a and 37b of the quantum circuit 37, respectively. After the quantum gate 38b, a swap gate 38c that swaps the states of the qubit q₀ and the qubit q₁ is disposed. A quantum gate 38d next to the swap gate 38c is a CNOT gate in which a qubit q₀ is a control qubit and a qubit q₂ is a target qubit.

Physical qubits are allocated to the qubits of the quantum circuit 38. Consequently, the physical qubit Q₁ is allocated to the qubit q₀, the physical qubit Q₀ is allocated to the qubit q₁, and the physical qubit Q₂ is allocated to the qubit q₂.

After the execution of the swap gate 38c, the state of the qubit q₀ becomes the state of the qubit q₁ before the execution of the swap gate 38c. After the execution of the swap gate 38c, the state of the qubit q₁ becomes the state of the qubit q₀ before the execution of the swap gate 38c. By performing such allocation of the physical qubits, the quantum circuit 38 may be executed.

As described above, in many cases, the quantum circuit 37 for processing does not satisfy the actual machine constraint as it is. By performing conversion into the equivalent quantum circuit 38 by using the swap gate, qubit allocation satisfying the actual machine constraint is performed. At this time, there may be a plurality of patterns of the allocation of the quantum circuit and the physical qubit after the conversion that may satisfy the actual machine constraint. Which allocation pattern is to be applied is indicated by, for example, a parameter. How physical qubits are allocated affects the probability of error occurrence.

When the quantum computer 200 uses the quantum device 220 of a superconducting method, the qubit is operated by pulse irradiation of microwave. With the classical computer 100, a schedule of pulse irradiation along the quantum circuit is determined.

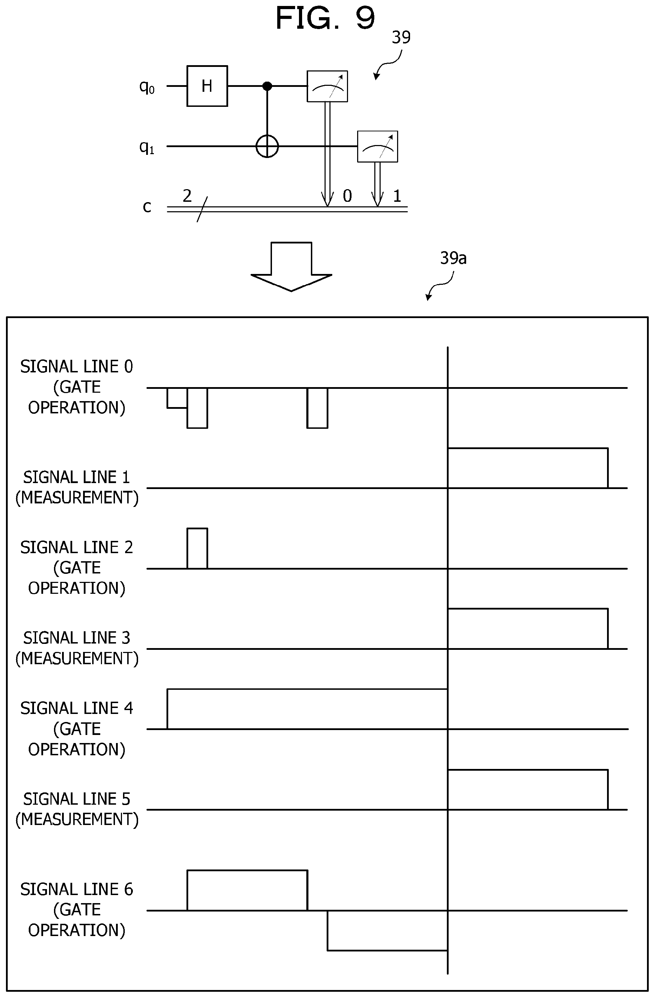

FIG. 9 is a diagram illustrating an example of the pulse schedule. The quantum computer 200 is provided with a plurality of signal lines for irradiating the quantum gate in the quantum device 220 with a pulse wave. There are signal lines for gate operation and signal lines for measurement. In a pulse schedule 39a, a period in which a pulse wave is irradiated in each signal line, intensity, and the like are indicated.

At this time, for example, an output timing of the pulse wave for the gate operation may be adjusted within a range in which an anteroposterior relationship of the gate operations does not deviate from the quantum circuit 39. The output timing of the pulse wave for measurement may also be adjusted. Such a difference in the output timing of the pulse wave affects an error occurrence rate. The output timing of the pulse wave is represented by a parameter in the pulse schedule 39a.

Depending on a setting content of the parameter related to the execution environment, the error occurrence rate of the quantum circuit changes. When, for example, average fidelity of the quantum gates of the actual machine in accordance with the setting of parameters may be measured, physical qubits may be allocated so as to increase the fidelity, or pulse scheduling may be performed so as to achieve the highest fidelity.

Since a quantum circuit U without mid-circuit measurement is reversible, it is expected that the measurement result when an inverse circuit U^{†} is executed after the quantum circuit U normally returns to the initial value. By using this, it is possible to evaluate whether or not a correct execution result is obtained. By contrast, when a quantum circuit having mid-circuit measurement is executed by the quantum computer 200, it is not easy to determine whether or not the execution result is correct. Consequently, in the quantum computation system 300, the quantum circuit having mid-circuit measurement is divided, and optimization of the parameter is performed by using a statistical value of an all-zero sequence as an objective function for each of the sub-circuits obtained by the division.

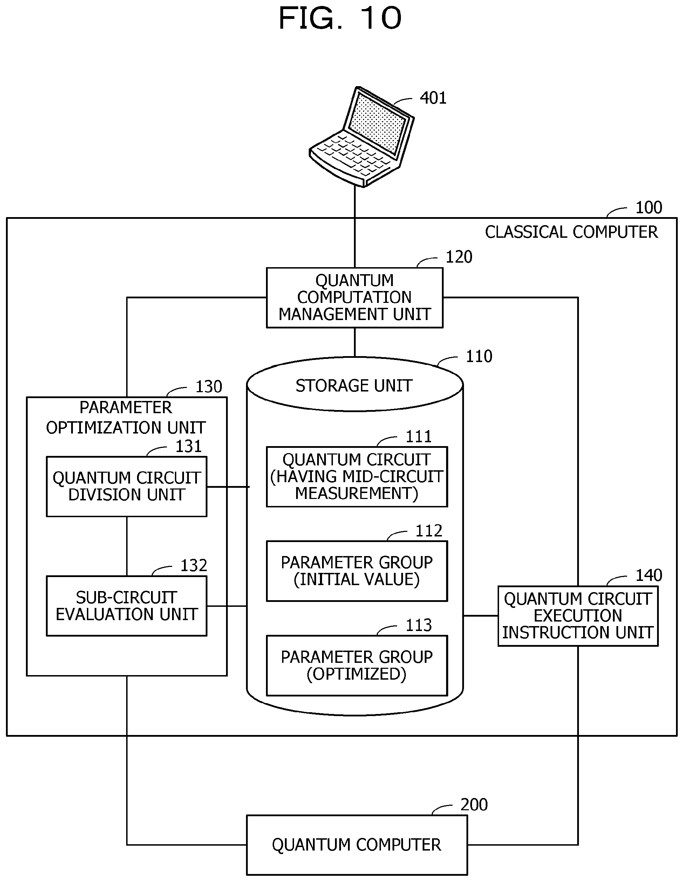

FIG. 10 is a block diagram illustrating an example of functions of the classical computer for quantum computation. The classical computer 100 has a storage unit 110, a quantum computation management unit 120, a parameter optimization unit 130, and a quantum circuit execution instruction unit 140.

The storage unit 110 stores information used for quantum computation. For example, the storage unit 110 stores a quantum circuit 111 having mid-circuit measurement, a parameter group 112 in which initial values are set, and an optimized parameter group 113. The quantum circuit 111 is, for example, a quantum circuit configured by a native gate. The parameter groups 112 and 113 include, for example, a parameter indicating an allocation pattern of physical qubits and a parameter indicating an output timing of a pulse wave in a pulse schedule.

The quantum computation management unit 120 manages execution of the quantum computation in response to a quantum computation request from the terminal device 401. For example, the quantum computation management unit 120 converts a quantum circuit transmitted from the terminal device 401 into an equivalent quantum circuit 111 configured only by native gates. The quantum computation management unit 120 stores the quantum circuit 111 in the storage unit 110. The quantum computation management unit 120 stores, in the storage unit 110, the parameter group 112 including a plurality of parameters to be set when the quantum circuit 111 is executed.

After storing the quantum circuit 111 and the parameter group 112, the quantum computation management unit 120 instructs the parameter optimization unit 130 to optimize the parameters. When receiving a termination response of the parameter optimization from the parameter optimization unit 130, the quantum computation management unit 120 instructs the quantum circuit execution instruction unit 140 to execute the quantum circuit 111 using the optimized parameter group 113. The quantum computation management unit 120 acquires a computation result by the quantum circuit 111 from the quantum circuit execution instruction unit 140, and transmits the computation result to the terminal device 401.

The parameter optimization unit 130 optimizes values of the plurality of parameters to be applied at the time of execution of the quantum circuit 111. For example, the parameter optimization unit 130 optimizes the values of the plurality of parameters such that the correctness (for example, average fidelity) of the execution result of the quantum computation using the quantum circuit 111 is improved. The parameter optimization unit 130 has a quantum circuit division unit 131 and a sub-circuit evaluation unit 132 for the optimization of the values of the parameters.

The quantum circuit division unit 131 divides the quantum circuit 111 to generate a plurality of sub-circuits. For example, the quantum circuit division unit 131 divides the quantum circuit 111 at a location of mid-circuit measurement. With respect to each of the sub-circuits other than the first sub-circuit, the quantum circuit division unit 131 adds a random circuit that generates a random initial state. In this case, a plurality of random circuits that generate different initial states are added to one sub-circuit. To each partial circuit obtained by division, the quantum circuit division unit 131 adds an inverse circuit of the partial circuit.

The sub-circuit evaluation unit 132 performs optimization processing of the value of the parameter for each sub-circuit. With respect to each sub-circuit, for example, the sub-circuit evaluation unit 132 optimizes a value of a parameter that affects the correctness of the execution result of the sub-circuit by using a statistical value of an all-zero sequence as an objective function.

The quantum circuit execution instruction unit 140 instructs the quantum computer 200 to execute the quantum circuit 111 by using the optimized parameter group 113. The quantum circuit execution instruction unit 140 transmits the computation result by the quantum computer 200 to the quantum computation management unit 120.

For example, the function of each element illustrated in FIG. 10 may be realized by causing the processor 101 to execute a program module corresponding to the element.

With the classical computer 100 having such a function, it is possible to optimize parameters to be set at the time of execution of the quantum circuit having mid-circuit measurement.

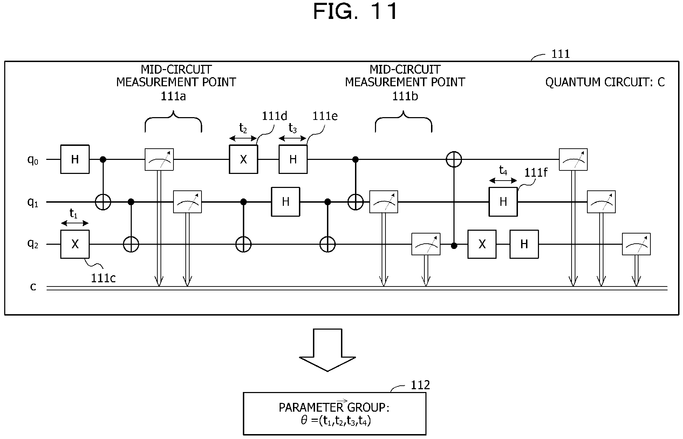

FIG. 11 is a diagram illustrating an example of a quantum circuit to be executed. Mid-circuit measurement is performed at two locations in the quantum circuit 111 to be executed. Due to the presence of mid-circuit measurement points 111a and 111b, the quantum circuit 111 has irreversibility. For example, there is no inverse circuit that returns the state of the qubit to the input state after the series of gate operations indicated in the quantum circuit 111. The quantum computation management unit 120 sets the quantum circuit 111 to be executed as "C".

In the quantum circuit 111, there are quantum gates 111c to 111f having a degree of freedom in adjusting an execution timing. The quantum computation management unit 120 sets a parameter indicating an execution timing of each of the quantum gates 111c to 111f. For example, the quantum computation management unit 120 sets the parameter indicating the execution timing of the quantum gate 111c as "t₁". The quantum computation management unit 120 sets the parameter indicating the execution timing of the quantum gate 111d as "t₂". The quantum computation management unit 120 sets the parameter indicating the execution timing of the quantum gate 111e as "t₃". The quantum computation management unit 120 sets the parameter indicating the execution timing of the quantum gate 111f as "t₄". At this time, the parameter group 112 is represented by "vector θ = (t₁, t₂, t₃, t₄)".

A time taken to execute each quantum gate is determined. Consequently, it is possible to accurately compute in advance how many microseconds each of the quantum gates 111c to 111f having a degree of freedom in adjusting the execution timing is free (adjustable duration).

The parameter optimization unit 130 acquires the quantum circuit 111 and the parameter group 112. The quantum circuit division unit 131 in the parameter optimization unit 130 divides the quantum circuit 111 at the mid-circuit measurement points 111a and 111b.

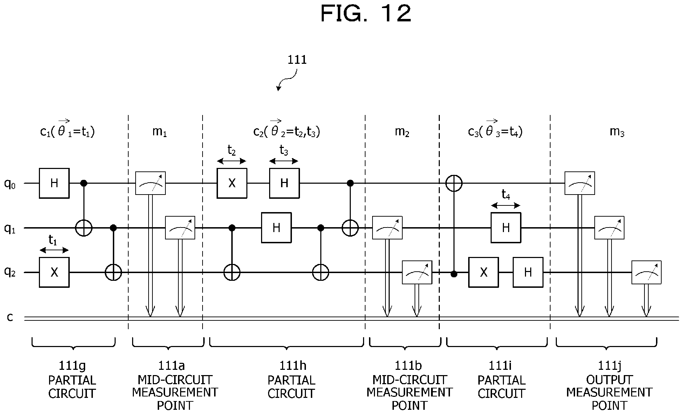

FIG. 12 is a diagram illustrating an example of a division result of the quantum circuit. When there are a plurality of measurements at the same time, the quantum circuit division unit 131 collectively divides the measurements. When the quantum circuit 111 is divided at the mid-circuit measurement points 111a and 111b, the quantum circuit 111 is divided into the mid-circuit measurement points 111a and 111b, partial circuits 111g to 111i, and an output measurement point 111j.

When there are "N-1" (N is an integer equal to or greater than 2) mid-circuit measurement points in the quantum circuit "C", expressions representing the respective sub-circuits at the time of division are "c₁, c₂, ..., c_{N}". Expressions representing the respective N mid-circuit measurement points are "m₁, m₂, ..., m_{N}". In this case, the quantum circuit "C" becomes "C = c₁m₁c₂m₂ ... c_{N}m_{N}".

With respect to each of the partial circuits 111g to 111i, the quantum circuit division unit 131 generates a parameter group that indicates the execution timing of the quantum gate that has a degree of freedom in the execution timing. A parameter group of an i-th (i is an integer of 1 or more and N or less) sub-circuit is referred to as "vector θᵢ". The parameter that indicates the execution timing of the quantum gate that has a degree of freedom in the execution timing in the i-th sub-circuit is an element of "vector θᵢ".

For example, the parameter group of the partial circuit 111g is "vector θ₁ = (t₁)". The parameter group of the partial circuit 111h is "vector θ₂ = (t₂, t₃)". The parameter group of the partial circuit 111i is "vector θ₃ = (t₄)".

The quantum circuit division unit 131 transmits the partial circuits 111g to 111i obtained by dividing the quantum circuit 111 and the parameter groups corresponding to the respective partial circuits 111g to 111i to the sub-circuit evaluation unit 132. With respect to each of the partial circuits 111g to 111i, the sub-circuit evaluation unit 132 optimizes the parameters by using the statistical value of the all-zero sequence as the objective function.

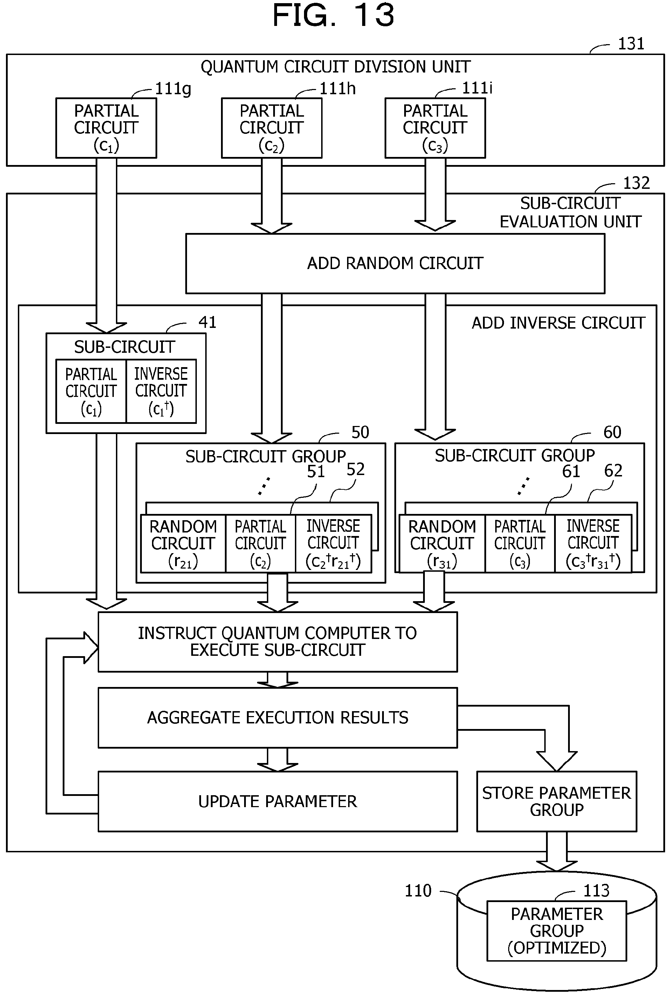

FIG. 13 is a diagram illustrating an example of the optimization processing of the sub-circuit. With respect to each of the partial circuits 111h and 111i of which the execution order in the quantum circuit 111 is the second or later, among the partial circuits 111g to 111i generated by division, the sub-circuit evaluation unit 132 adds a random circuit for generating an initial state.

When the generation number of random circuits is denoted by n (n is a natural number), the sub-circuit evaluation unit 132 generates, for example, n random circuits "r₂₁, r₂₂, ..., and r₂ₙ" for the partial circuit 111h. The sub-circuit evaluation unit 132 generates n copies of the partial circuit 111h. The sub-circuit evaluation unit 132 adds each of the n random circuits to the input side of the circuit of each of the n copies of the partial circuit 111h.

With respect to the partial circuit 111i, the sub-circuit evaluation unit 132 adds each of the n random circuits to the input side of each of the n copies of the partial circuit 111i.

Next, the sub-circuit evaluation unit 132 adds an inverse circuit to the output side of each of the partial circuits 111g to 111i. When an arithmetic operation by an original circuit is denoted by U, the inverse circuit is represented by a Hermitian conjugate U^{†} of U. For example, the first partial circuit 111g is changed to a sub-circuit 41 that executes an inverse circuit of an inverse arithmetic operation "c₁^{†}" of the partial circuit 111g after the copy (arithmetic operation "c₁") of the partial circuit 111g.

The second partial circuit 111h is converted into a plurality of sub-circuits 51, 52, and ... for each random circuit. A set of the sub-circuits 51, 52, and ... is referred to as a sub-circuit group 50. For example, the sub-circuit 51 to which the random circuit of the arithmetic operation "r₂₁" is added is a circuit that sequentially executes the random circuit of the arithmetic operation "r₂₁", the partial circuit of the arithmetic operation "c₂", and the inverse circuit of those arithmetic operations "c₂^{†}r₂₁^{†}. In the inverse circuit, the execution order of the inverse arithmetic operation "c₂^{†}" of the partial circuit is earlier than that of the inverse arithmetic operation "r₂₁^{†}" of the random circuit.

The third partial circuit 111i is converted into a plurality of sub-circuits 61, 62, and ... for each random circuit. A set of the sub-circuits 61, 62, and ... is referred to as a sub-circuit group 60. For example, the sub-circuit 61 to which the random circuit of an arithmetic operation "r₃₁" is added is a quantum circuit that sequentially executes the random circuit of the arithmetic operation "r₃₁", the partial circuit of an arithmetic operation "c₃", and the inverse circuit of an inverse arithmetic operation "c₃^{†}r₃₁^{†}" of those arithmetic operations.

With respect to the first sub-circuit 41, the sub-circuit evaluation unit 132, for example, sets the input states of all the qubits to |0> and instructs the quantum computer 200 to execute the first sub-circuit 41 by a predetermined number of shots (the number of times of repetition). The sub-circuit evaluation unit 132 aggregates the execution results of the sub-circuit 41. When there is no error, the output state of the sub-circuit 41 is expected to be |0> for all the qubits. Consequently, the sub-circuit evaluation unit 132 obtains, for example, a probability that all the qubits are |0>. Based on the aggregation result, the sub-circuit evaluation unit 132 updates the value of the parameter so as to improve the probability that all the qubits are |0> in the output state.

The sub-circuit evaluation unit 132 repeats the execution instruction of the sub-circuit 41 to the quantum computer 200, the aggregation of the execution results, and the update of the parameter until a predetermined termination condition for the execution result is satisfied. The sub-circuit evaluation unit 132 holds the value of the parameter when the termination condition is satisfied as an optimum value.

With respect to each of the sub-circuits 51, 52, and ... in the sub-circuit group 50, the sub-circuit evaluation unit 132, for example, sets the input states of all the qubits to |0> and instructs the quantum computer 200 to execute a predetermined number of shots. The sub-circuit evaluation unit 132 aggregates the execution results of the sub-circuits 51, 52, and .... When there is no error, the output states of the sub-circuits 51, 52, and ... are expected to be |0> for all the qubits. Consequently, the sub-circuit evaluation unit 132 obtains, for example, a probability that all the qubits are |0>. Based on the aggregation result, the sub-circuit evaluation unit 132 updates the value of the parameter so as to improve the probability that all the qubits are |0> in the output state.

The sub-circuit evaluation unit 132 repeats the execution instruction of the sub-circuits 51, 52, and ... to the quantum computer 200, the aggregation of the execution results, and the update of the parameter until a predetermined termination condition for the execution results is satisfied. The sub-circuit evaluation unit 132 holds the value of the parameter when the termination condition is satisfied as an optimum value.

With respect to the sub-circuit group 60, the sub-circuit evaluation unit 132 executes the same processing as that of the sub-circuit group 50, and obtains an optimum value of the parameter. The sub-circuit evaluation unit 132 stores, in the storage unit 110, the parameter group 113 in which the optimum values of all the parameters are set.

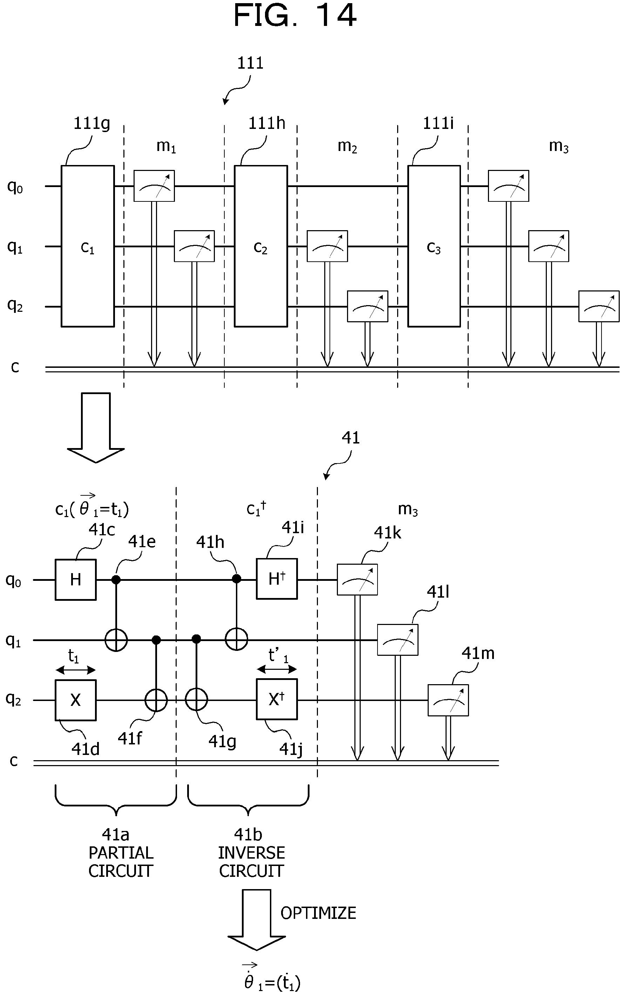

FIG. 14 is a diagram illustrating a first example of a sub-circuit to which an inverse circuit is added. FIG. 14 illustrates an example in which an inverse circuit 41b is added to the first partial circuit 111g among the partial circuits 111g to 111i obtained by dividing the quantum circuit 111.

In the sub-circuit 41 after the addition of the inverse circuit 41b, the inverse circuit 41b is added after a partial circuit 41a indicating the same arithmetic operation as that of the partial circuit 111g to be processed. In the partial circuit 41a, a Hadamard gate 41c to be operated on the qubit q₀ and an X gate 41d to be operated on the qubit q₂ are disposed. Next, a CNOT gate 41e in which a qubit q₀ is a control qubit and a qubit q₁ is a target qubit is disposed. Next, a CNOT gate 41f in which a qubit q₁ is a control qubit and a qubit q₂ is a target qubit is disposed.

In the inverse circuit 41b, qubits corresponding to the respective qubits of the partial circuit 41a are disposed in inverse order. With respect to the qubits of the partial circuit 41a and the corresponding qubits of the inverse circuit 41b, the arithmetic operations by the gate operations are inverse (Hermitian conjugate).

For example, a CNOT gate 41g in which initially a qubit q₁ is a control qubit and a qubit q₂ is a target qubit is disposed in the inverse circuit 41b. Next, a CNOT gate 41h in which a qubit q₀ is a control qubit and a qubit q₁ is a target qubit is disposed. Next, a Hermitian conjugate quantum gate 41i of the Hadamard gate to be operated on the qubit q₀ and a Hermitian conjugate quantum gate 41j of an X gate to be operated on the qubit q₂ are disposed.

After the inverse circuit 41b, gate operations of measurements 41k to 41m for each qubit are indicated.

When |0> is input to each of the qubits of the sub-circuit 41 and the sub-circuit 41 is executed, it is expected that all the values measured by the measurements 41k to 41m are also |0> unless an error due to the influence of noise occurs. When an error occurs, |1> is measured in any qubit. In the qubit where |1> is measured, it is possible to determine that an error has occurred in the qubit.

The probability of error occurrence is affected by, for example, the operation timing of the quantum gate. In the sub-circuit 41, the X gate 41d and the Hermitian conjugate quantum gate 41j of the X gate are capable of adjusting the timing of the gate operation. A parameter indicating an execution timing of the X gate 41d is referred to as t₁, and a parameter indicating an execution timing of the quantum gate 41j is referred to as "t'₁".

With respect to the measurement results obtained when the sub-circuit 41 (arithmetic operation of "c₁c₁^{†}") is executed a plurality of times, the sub-circuit evaluation unit 132 optimizes the parameter group "vector θ₁ = (t₁)" such that the number of times parameter group |000> is satisfied increases. "vector θ₁ = (t₁)" is obtained as the optimum parameter group (θ and t₁ are indicated by upper dots).

With the addition of the inverse circuit 41b, the parameter "t'₁" is increased in the sub-circuit 41. By setting the value of this parameter to, for example, an appropriate fixed value, the sub-circuit evaluation unit 132 optimizes the parameter "t₁". The sub-circuit evaluation unit 132 may optimize the increased parameter "t'₁" at the same time. In a case where the optimization is performed by including the parameter "t'₁", when the sub-circuit evaluation unit 132, for example, shifts the parameter "t₁" forward or backward, shifts the parameter "t'₁" in the inverse direction by the same amount.

The Hadamard gate and the Hermitian conjugate of the Hadamard gate are the same arithmetic operation (H^{†} = H). Similarly, the X gate and the Hermitian conjugate of the X gate are the same arithmetic operation (X^{†} = X). While not included in the sub-circuit 41, with respect to a Y gate and a Z gate, the arithmetic operations of those quantum gates and the arithmetic operation of the Hermitian conjugate are the same (Y^{†} = Y, Z^{†} = Z). Consequently, in the following description, it is assumed that H^{†} in the inverse circuit is represented by H, X^{†} in the inverse circuit is represented by X, Y^{†} in the inverse circuit is represented by Y, and Z^{†} in the inverse circuit is represented by Z.

With respect to the partial circuits 111h, 111i, and ... other than the first partial circuit 111g, initial states by the plurality of random circuits are input states. For example, the sub-circuit evaluation unit 132 generates a plurality of random circuits for the i-th sub-circuit represented by an arithmetic operation cᵢ (i ∈ {2, ..., and N}). For example, the random circuit for the i-th sub-circuit is represented by the following expression.$\vec{{r}_{ι}} = \left\{{r}_{i 1},{r}_{i 2},…,{r}_{im}\right\}$

The sub-circuit evaluation unit 132 adds a random circuit to the input side of each of the n copies of the i-th sub-circuit and adds an inverse circuit to the output side thereof. Consequently, a plurality of sub-circuits {rᵢ₁cᵢcᵢ^{†}rᵢ₁^{†}, rᵢ₂cᵢcᵢ^{†}rᵢ₂^{†}, ..., and rᵢₙcᵢcᵢ^{†}rᵢₙ^{†}} are obtained.

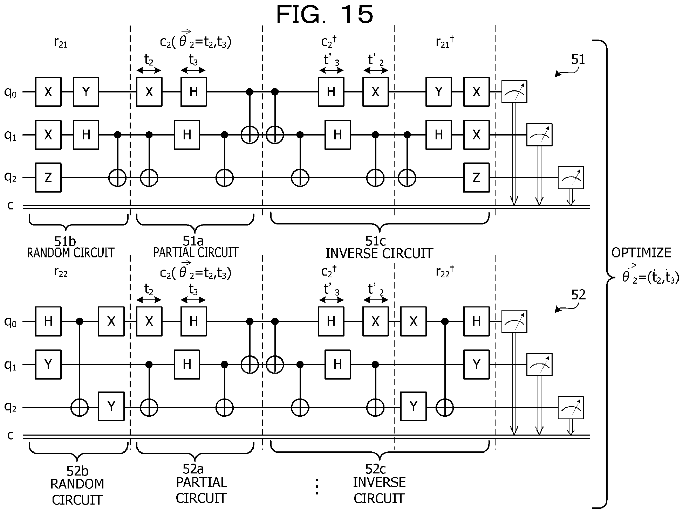

FIG. 15 is a diagram illustrating a second example of the sub-circuit to which an inverse circuit is added. FIG. 15 illustrates a generation example of the plurality of sub-circuits 51, 52, and ... that perform an arithmetic operation on a random initial state based on the second partial circuit 111h among the partial circuits 111g to 111i obtained by dividing the quantum circuit 111.

For example, in the sub-circuit 51, a random circuit 51b that performs an arithmetic operation of "r₂₁" is added before a partial circuit 51a that is a copy of the partial circuit 111h obtained by division. After the partial circuit 51a, an inverse circuit 51c that performs an inverse arithmetic operation of the partial circuit 51a and the random circuit 51b is added. The inverse circuit 51c is a circuit that executes a Hermitian conjugate "c₂^{†}" of the arithmetic operation "c₂" of the partial circuit 51a and then executes a Hermitian conjugate "r₂₁^{†}" of the arithmetic operation "r₂₁" of the random circuit 51b. Measurement is performed after the inverse circuit 51c.

In the sub-circuit 52, a random circuit 52b that performs an arithmetic operation of "r₂₂" is added before a partial circuit 52a that is a copy of the partial circuit 111h obtained by division. After the partial circuit 52a, an inverse circuit 52c that performs an inverse arithmetic operation of the partial circuit 52a and the random circuit 52b is added. The inverse circuit 52c is a circuit that executes the Hermitian conjugate "c₂^{†}" of the arithmetic operation "c₂" of the partial circuit 52a and then executes the Hermitian conjugate "r₂₂^{†}" of the arithmetic operation "r₂₂" of the random circuit 52b. Measurement is performed after the inverse circuit 52c.

For each of the other random circuits (rᵢ₃, ..., and rᵢₙ), a sub-circuit obtained by adding a random circuit and an inverse circuit to the partial circuit 52a that is the copy of the partial circuit 111h is generated. By executing each of these sub-circuits 51, 52, and ... a plurality of times, the sub-circuit evaluation unit 132 updates "vector θᵢ" indicating the values of the parameter group of each of the sub-circuits 51, 52, and ... in a direction in which the total number of times that |0 ... 0> is satisfied increases.

Until "vector θᵢ" converges, the sub-circuit evaluation unit 132 repeats the execution of the sub-circuits 51, 52, and ... and the update of "vector θᵢ". With this, the values of the parameter group indicated by "vector θᵢ" are optimized. For example, the sub-circuits 51, 52, and ... include a parameter group represented by "vector θ₂ = (t₂, t₃)". Consequently, the values of the parameters "t₂, t₃" are optimized. "vector θ₂ = (t₂, t₃)" (θ, t₂, and t₃ are indicated by upper dots) indicating the values of the optimized parameter group is obtained.

With the addition of the inverse circuit 52c, in the sub-circuit 51, parameters "t'₂ and t'₃" are increased. By setting the values of these parameters to, for example, appropriate fixed values, the sub-circuit evaluation unit 132 optimizes the parameter "t₁". The sub-circuit evaluation unit 132 may optimize the increased parameters "t₂, t₃" at the same time. In a case where the optimization is performed by including the parameters "t'₂, t'₃", when the sub-circuit evaluation unit 132, for example, shifts the parameter "t₂" forward or backward, shifts the parameter "t'₂" in the inverse direction by the same amount. Similarly, when shifting the parameter "t₃" forward or backward, for example, the sub-circuit evaluation unit 132 shifts the parameter "t'₃" in the inverse direction by the same amount.

With respect to the third partial circuit 111i among the partial circuits 111g to 111i obtained by dividing the quantum circuit 111, the parameter "t₄" is optimized in the same manner as in the partial circuit 111h. Consequently, the optimized parameter group 113 is obtained.

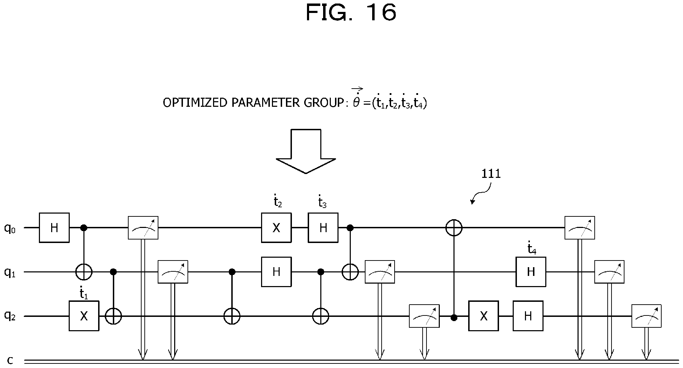

FIG. 16 is a diagram illustrating an example of the optimized parameter group. The optimized parameter group 113 is represented by "vector θ = (t₁, t₂, t₃, t₄)" (θ, t₁, t₂, t₃, and t₄ are indicated by upper dots). When the quantum circuit 111 is executed, a quantum gate having a degree of freedom in the execution timing is executed at a timing indicated by the parameter group 113.

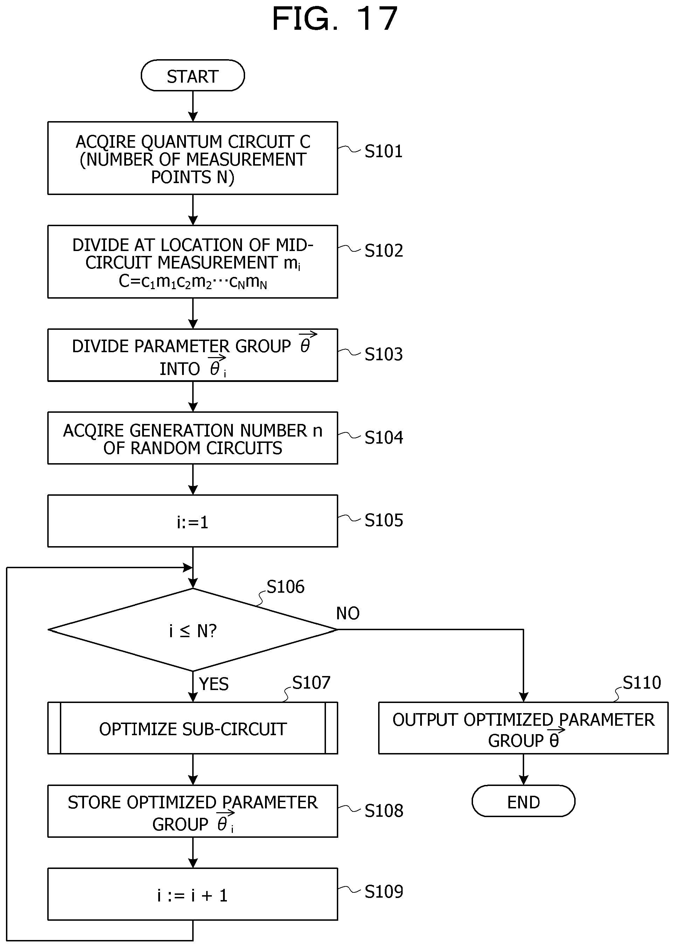

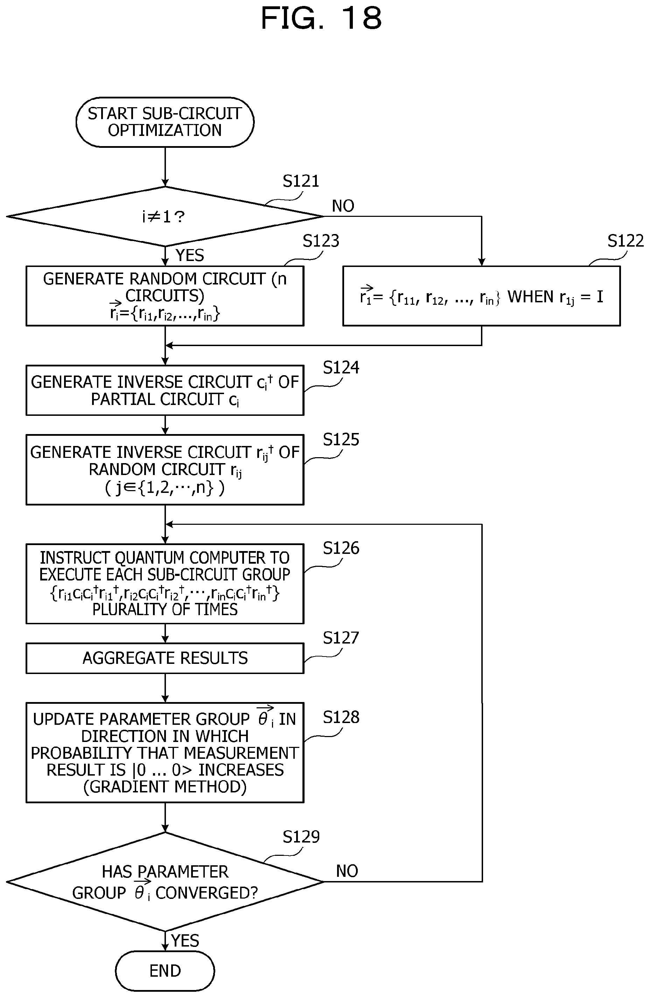

With reference to FIGs. 17 and 18, a procedure of the parameter optimization processing will be described in detail next.

FIG. 17 is a flowchart illustrating an example of the procedure of the parameter optimization processing. Hereinafter, processing illustrated in FIG. 17 will be described in accordance with step numbers.

[Step S101] The parameter optimization unit 130 acquires a quantum circuit having mid-circuit measurement. The acquired quantum circuit is referred to as "C". The number of measurement points (mid-circuit measurement and output state measurement) included in the acquired quantum circuit "C" is referred to as "N".

[Step S102] The quantum circuit division unit 131 divides the quantum circuit "C" at the location of mid-circuit measurement mᵢ (1 ≤ i < N). Consequently, the quantum circuit "C" becomes "C = c₁m₁c₂m₂ ... c_{N}m_{N}".

[Step S103] The quantum circuit division unit 131 divides the parameter group represented by "vector θ" into parameter groups for each of the sub-circuits obtained by division. With this, "vector θᵢ" indicating the parameter group for each sub-circuit is obtained.

[Step S104] The sub-circuit evaluation unit 132 acquires a generation number of random circuits "n". For example, the sub-circuit evaluation unit 132 reads the generation number "n" set in advance by the user from the memory 102 or the storage device 103.

[Step S105] The sub-circuit evaluation unit 132 sets a variable i to "1".

[Step S106] The sub-circuit evaluation unit 132 determines whether or not the value of the variable i is equal to or smaller than the number of measurement points "N". When the value of the variable i is equal to or smaller than "N", the sub-circuit evaluation unit 132 advances the processing to step S107. When the value of the variable i exceeds "N", the sub-circuit evaluation unit 132 advances the processing to step S110.

[Step S107] The sub-circuit evaluation unit 132 executes sub-circuit optimization processing for an i-th sub-circuit. Details of the sub-circuit optimization processing will be described later (see FIG. 18). By the sub-circuit optimization processing, the values of the parameter group corresponding to the i-th sub-circuit are optimized. The optimized parameter group is represented by "vector θᵢ" (θ is indicated by an upper dot).

[Step S108] The sub-circuit evaluation unit 132 stores, in the memory 102, "vector θᵢ" (θᵢ is indicated by an upper dot) indicating the optimized parameter group.

[Step S109] The sub-circuit evaluation unit 132 adds 1 to the variable i. After that, the sub-circuit evaluation unit 132 advances the processing to step S106.

[Step S110] The sub-circuit evaluation unit 132 outputs an optimized parameter group represented by "vector θ" (θ is indicated by an upper dot). For example, the sub-circuit evaluation unit 132 stores the optimized parameter group in the storage unit 110.

Next, the sub-circuit optimization processing will be described in detail.

FIG. 18 is a flowchart illustrating an example of a procedure of the sub-circuit optimization processing. Hereinafter, the processing illustrated in FIG. 18 will be described in accordance with step numbers.

[Step S121] The sub-circuit evaluation unit 132 determines whether or not the value of the variable i is "1". When the value of i is "1", the sub-circuit evaluation unit 132 advances the processing to step S122. When the value of i is not "1", the sub-circuit evaluation unit 132 advances the processing to step S123.

[Step S122] With respect to all the n random circuits, the sub-circuit evaluation unit 132 sets "rᵢⱼ = I" (j ∈{1, 2, ..., and n}). The arithmetic operation I indicates that a gate operation is not performed on the initial state |0 ... 0>. With this, a random circuit "vector r₁ = {r₁₁, r₁₂, ..., and r₁ₙ}" that substantially performs nothing is defined. After that, the sub-circuit evaluation unit 132 advances the processing to step S124.

[Step S123] The sub-circuit evaluation unit 132 generates n random circuits. The generated random circuits are referred to as "vector rᵢ = {rᵢ₁, rᵢ₂, ..., and rᵢₙ}". The sub-circuit evaluation unit 132 adds the random circuits before each of n copies of a partial circuit "cᵢ".

[Step S124] The sub-circuit evaluation unit 132 generates an inverse circuit "cᵢ^{†}" of the partial circuit "cᵢ". The sub-circuit evaluation unit 132 adds the generated inverse circuit "cᵢ^{†}" after the partial circuit "cᵢ" of which the number has become n due to copying.

[Step S125] The sub-circuit evaluation unit 132 generates an inverse circuit "rᵢⱼ^{†}" of the random circuit "rᵢⱼ" corresponding to each of the partial circuits of which the number has become n due to copying. With respect to a copy of a j-th partial circuit, the sub-circuit evaluation unit 132 adds the inverse circuit "rᵢⱼ^{†}" of the generated random circuit "rᵢⱼ" after the inverse circuit "cᵢ^{†}" of the partial circuit "cᵢ". With this configuration, n sub-circuits are generated.

[Step S126] The sub-circuit evaluation unit 132 instructs the quantum computer 200 to execute each of the sub-circuits included in the sub-circuit group {rᵢ₁cᵢcᵢ^{†}rᵢ₁^{†}, rᵢ₂cᵢcᵢ^{†}rᵢ₂^{†}, ..., and rᵢₙcᵢcᵢ^{†}rᵢₙ^{†}} a plurality of times. The sub-circuit evaluation unit 132 acquires an execution result of each sub-circuit from the quantum computer 200.

[Step S127] The sub-circuit evaluation unit 132 aggregates the execution results of the sub-circuits. For example, the sub-circuit evaluation unit 132 counts the number of times that the states of all the qubits are measured as |0> (|0 ... 0>) for each sub-circuit.

[Step S128] The sub-circuit evaluation unit 132 updates "vector θᵢ" indicating the parameter group in a direction in which the probability that the measurement result is |0 ... 0> increases. By using a gradient method, for example, the sub-circuit evaluation unit 132 determines the updated value of each element of the "vector θᵢ". This processing is parameter optimization processing in which a statistical appearance probability of an all-zero sequence is used as an objective function.

[Step S129] The sub-circuit evaluation unit 132 determines whether or not the change in "vector θᵢ" indicating the parameter group has converged. For example, the sub-circuit evaluation unit 132 computes a variation (for example, an inner product) of the "vector θᵢ" before and after the update in step S128, and determines that the change has converged when the variation is equal to or smaller than a threshold value. When the change in "vector θᵢ" indicating the parameter group has converged, the sub-circuit evaluation unit 132 ends the sub-circuit optimization processing. When the change in "vector θᵢ" indicating the parameter group has not converged, the sub-circuit evaluation unit 132 advances the processing to step S126.

By doing so, for each of the sub-circuits obtained by dividing the quantum circuit having mid-circuit measurement, the values of the parameter groups included in the sub-circuits are optimized. For example, with respect to all the parameters set at the time of execution of the quantum circuit having mid-circuit measurement, optimization is performed by using the statistical appearance probability of the all-zero sequence as the objective function. By causing the quantum computer 200 to execute the quantum circuit 111 to which the optimized parameter group 113 is applied, quantum computation with high average fidelity may be performed.

Since actual input states to the second and subsequent sub-circuits after the division are not known in advance, the input states are randomly created for the respective divided sub-circuits. With this, it is possible to obtain a parameter having an averagely good value for any input state.

### [Third Embodiment]

A third embodiment is a quantum computation system that may generate a state closer to an actual initial state than a case in which a circuit is simply randomly generated as an initial state of a sub-circuit.

In the second embodiment described above, when, for example, "cᵢ" (i ∈ {2, ..., and N}) is optimized, the sub-circuit evaluation unit 132 uses the generated random circuit "rᵢ = {rᵢ₁, rᵢ₂, ..., and rᵢₙ}" as it is. In the third embodiment, when the distribution of the measurement results when "c₁m₁c₂m₂ ... cᵢ₋₁mᵢ₋₁" is executed a plurality of times and the distribution of the random circuit "rᵢⱼ" are far from each other, the sub-circuit evaluation unit 132 discards the random circuit "rᵢⱼ". With this, a state close to the actual initial state may be prepared. The approximation of the distributions may be compared by using, for example, KL-divergence (Kullback-Leibler divergence).

In the third embodiment, the sub-circuit optimization processing (step S107 in FIG. 17) is different from that of the second embodiment.

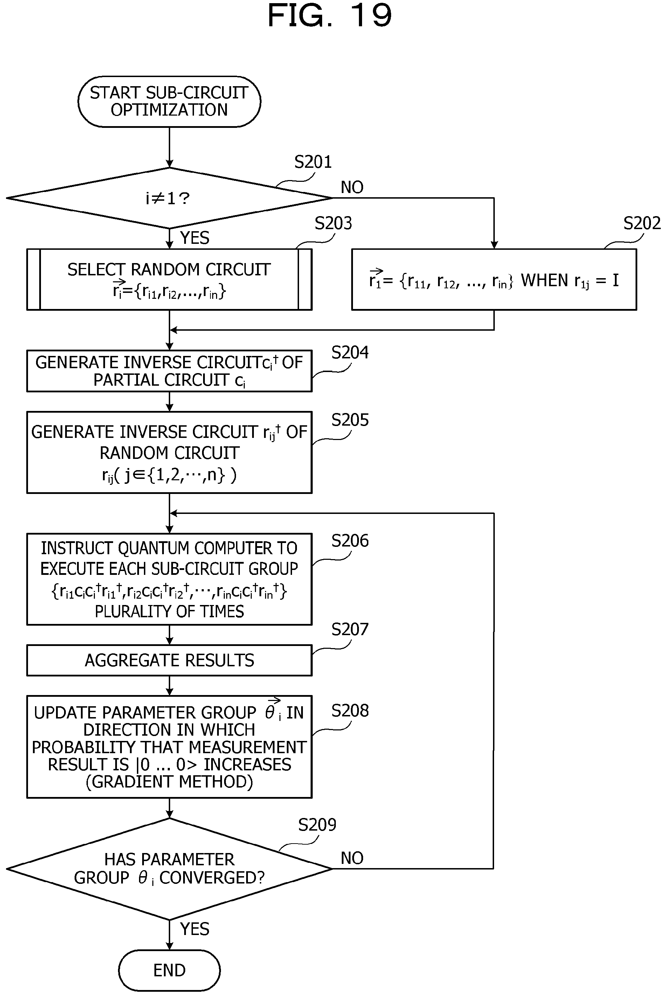

FIG. 19 is a flowchart illustrating an example of a procedure of the sub-circuit optimization processing according to the third embodiment. Hereinafter, of the processing illustrated in FIG. 19, processing in steps S201, S202, and S204 to S209 is the same as the processing in steps S121, S122, and S124 to S129 in the second embodiment illustrated in FIG. 18, respectively.

In the third embodiment, in step S203, instead of simple random circuit generation processing (step S123 in FIG. 18), random circuit selection processing of selecting a random circuit having an appropriate distribution of output states is performed. The random circuit selection processing is processing of selecting a random circuit that generates a state close to an actual initial state from among the generated random circuits.

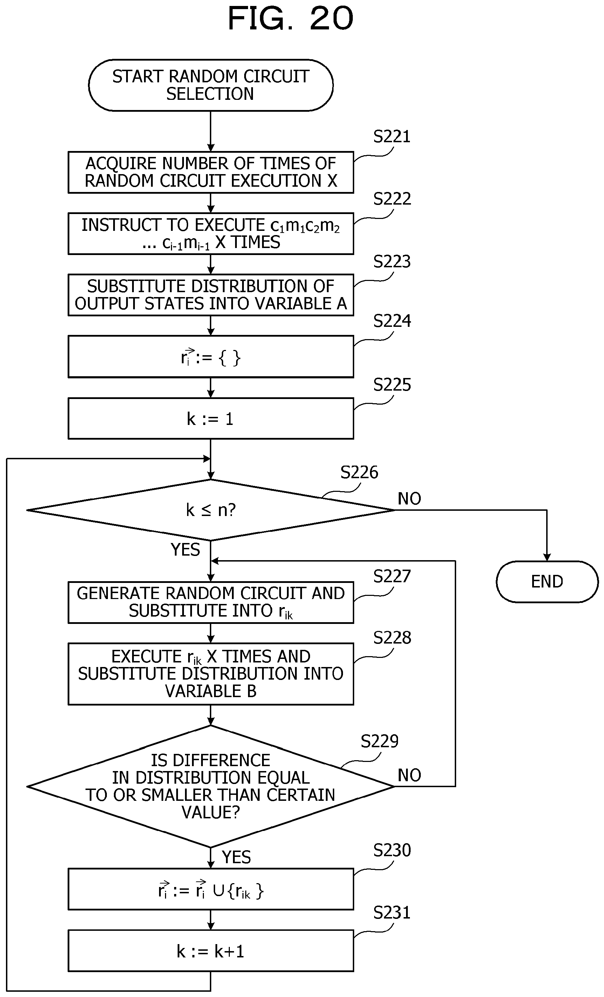

FIG. 20 is a flowchart illustrating an example of a procedure of the random circuit selection processing. Hereinafter, the processing illustrated in FIG. 20 will be described in accordance with step numbers.

[Step S221] The sub-circuit evaluation unit 132 acquires the number of times of random circuit execution "X". For example, the sub-circuit evaluation unit 132 reads the number of times of random circuit execution "X" set in advance by the user from the memory 102 or the storage device 103.

[Step S222] The sub-circuit evaluation unit 132 instructs the quantum computer 200 to execute an arithmetic operation "c₁m₁c₂m₂ ... cᵢ₋₁mᵢ₋₁" of the quantum circuit up to the i-th sub-circuit X times.

[Step S223] The sub-circuit evaluation unit 132 acquires the measurement result from the quantum computer 200, and substitutes the distribution of the output states into a variable A.

[Step S224] With an empty set, the sub-circuit evaluation unit 132 generates "vector rᵢ" indicating a set of random circuits (vector rᵢ: = {}).

[Step S225] The sub-circuit evaluation unit 132 sets a variable k to "1".

[Step S226] The sub-circuit evaluation unit 132 determines whether or not the value of the variable k is equal to or smaller than "n". When the value of the variable k is equal to or smaller than "n", the sub-circuit evaluation unit 132 advances the processing to step S227. When the value of the variable k exceeds "n", the sub-circuit evaluation unit 132 ends the random circuit selection processing.

[Step S227] The sub-circuit evaluation unit 132 generates a random circuit and substitutes the random circuit into "rᵢₖ".

[Step S228] The sub-circuit evaluation unit 132 causes the quantum computer 200 to execute the random circuit "rᵢₖ" X times, and substitutes the distribution of the states of the qubits after the execution into a variable B.

[Step S229] The sub-circuit evaluation unit 132 determines whether or not a difference in the distribution between the variable A and the variable B is equal to or smaller than a certain value. For example, the sub-circuit evaluation unit 132 computes the KL-divergence of the variable B with respect to the variable A. When the value of the KL-divergence is equal to or smaller than the certain value, the sub-circuit evaluation unit 132 determines that the distributions are approximate to each other, and advances the processing to step S230. When the value of the KL-divergence exceeds the certain value, the sub-circuit evaluation unit 132 discards the random circuit generated in the immediately preceding step S227, and advances the processing to step S227.

[Step S230] The sub-circuit evaluation unit 132 adds "rᵢₖ" to "vector rᵢ" indicating the set of random circuits (vector rᵢ: = vector rᵢ U {rᵢₖ}).

[Step S231] The sub-circuit evaluation unit 132 adds "1" to the value of the variable k (k: = k + 1), and advances the processing to step S226.

By doing so, n random circuits that generate a state close to the actual initial state are selected. By performing the optimization of the parameter group of the i-th sub-circuit by using the selected random circuits, the parameter group is optimized in accordance with the state at the time of execution of the sub-circuit at the time of execution of the quantum circuit 111. Consequently, appropriate values of the parameters included in the parameter group may be obtained with high accuracy, and the average fidelity at the time of execution of the quantum circuit 111 may be improved.

### [Fourth Embodiment]

A fourth embodiment is a quantum computation system 300 that optimizes a parameter indicating allocation of physical qubits to qubits of the quantum circuit 111. In the quantum computation system 300 according to the fourth embodiment, the all-zero sequence is evaluated for each element of a set M in which initial allocation and routing of physical qubits are performed so as to satisfy the actual machine constraint. Routing is processing of moving a state of a qubit to be subjected to a two-qubit gate operation to a qubit on which the two-qubit gate operation may be performed under the actual machine constraint by using a swap circuit so that target quantum computation may be performed.

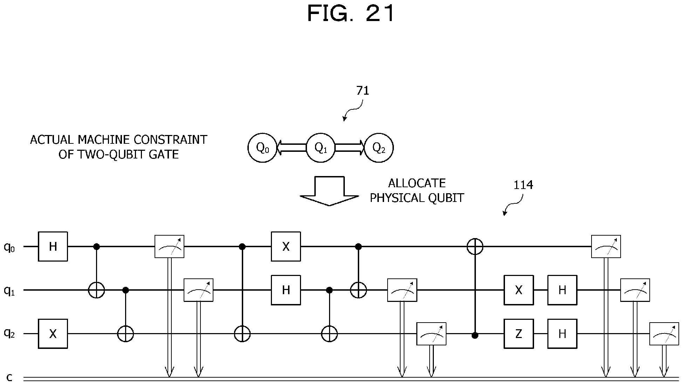

FIG. 21 is a diagram illustrating an example of an actual machine constraint for executing a quantum circuit having mid-circuit measurement. The actual machine constraint depends on a coupling relationship between qubits in the quantum device 220 included in the quantum computer 200. The actual machine constraint is represented by a directed graph 71. With the directed graph 71, an executable two-qubit gate is a two-qubit gate in which a physical qubit "Q₁" is a control qubit and a physical qubit "Q₀" or a physical qubit "Q₂" is a target qubit.

Parameters indicating the allocation of the physical qubits satisfying the actual machine constraint may not be divided for each sub-circuit, and the parameters of the sub-circuits are related to each other. In such a case, it is not possible to individually optimize each sub-circuit.

Consequently, in the fourth embodiment, the quantum circuit division unit 131 divides the quantum circuit at the location of the mid-circuit measurement "mᵢ". When there are a plurality of mid-circuit measurements at the same time, division is performed collectively. It is assumed that the number of points of the mid-circuit measurement is "N-1", and the mid-circuit measurement and the output measurement are referred to as "m₁, m₂, ..., and m_{N}". The arithmetic operations of the sub-circuits obtained by the division are referred to as "c₁, c₂, ..., and c_{N}". In this case, the arithmetic operation C of the quantum circuit is "C = c₁m₁c₂m₂ ... c_{N}m_{N}" due to division.

For example, a case in which a quantum circuit 114 is executed based on the actual machine constraint is assumed. The mid-circuit measurement point is included in the quantum circuit 114. Consequently, the quantum circuit division unit 131 divides the quantum circuit 114 at the mid-circuit measurement point.

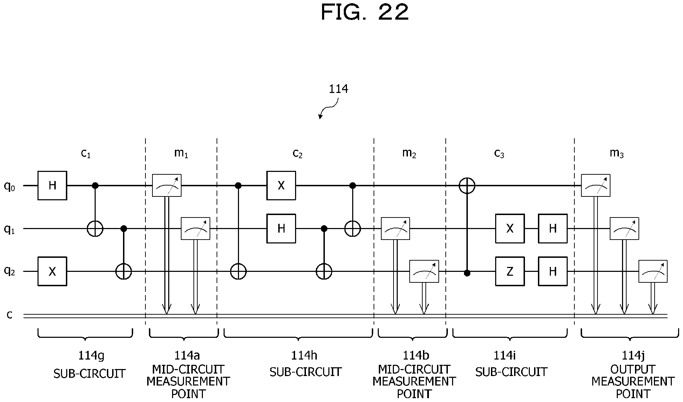

FIG. 22 is a diagram illustrating an example of a method for dividing a quantum circuit having mid-circuit measurement. For example, the quantum circuit division unit 131 divides the quantum circuit 114 at the mid-circuit measurement points 114a and 114b. When there are a plurality of mid-circuit measurements at the same time, the quantum circuit division unit 131 performs division collectively. With this, sub-circuits 114g to 114i are obtained.

The arithmetic operations executed by the sub-circuits 114g to 114i are referred to as "c₁", "c₂", and "c₃", respectively. The mid-circuit measurements at the mid-circuit measurement points 114a and 114b are referred to as "m₁" and "m₂", and measurement of the output state at an output measurement point 114j is referred to as "m₃". The arithmetic operation "C" by the quantum circuit 114 becomes "C = c₁m₁c₂m₂c₃m₃".

The sub-circuit evaluation unit 132 generates k allocation patterns Mₖ of the parameters indicating the initial allocation of the physical qubits and the parameters indicating the interchange of the states by the swap circuit in the middle. When all the allocation patterns of the parameters are referred to as M, "Mₖ ∈ M" is satisfied.

With respect to each of the allocation patterns Mₖ, the sub-circuit evaluation unit 132 evaluates the number of all-zero sequences. By applying the allocation patterns Mₖ to "C = c₁m₁c₂m₂ ... c_{N}m_{N}", for example, the sub-circuit evaluation unit 132 obtains an allocated and routed quantum circuit "C' = c'₁m'₁c'₂m'₂ ... c'_{N}m'_{N}".

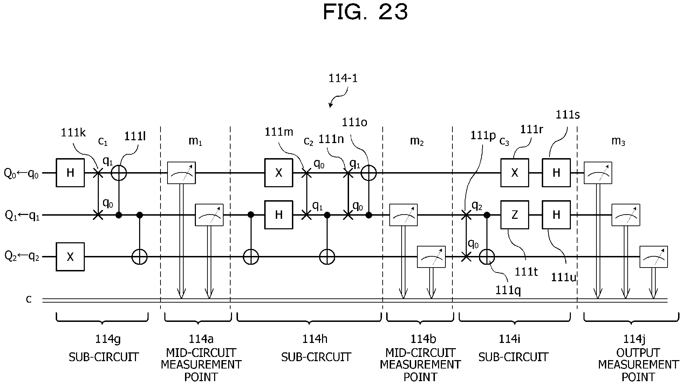

FIG. 23 is a diagram illustrating an example of the allocated and routed quantum circuit. For example, after the initial allocation, the quantum circuit 114 is corrected so as to satisfy the actual machine constraint indicated by the directed graph 71 (see FIG. 21), and becomes a quantum circuit 114-1.

In the quantum circuit 114-1, a physical qubit Q₀ is allocated to a qubit q₀. A physical qubit Q₁ is allocated to a qubit q₁ of the quantum circuit 114-1. A physical qubit Q₃ is allocated to a qubit q₃ of the quantum circuit 114-1.

A swap gate 111k between the qubit q₀ and the qubit q₁ is added to the sub-circuit 114g. In a CNOT gate 111l next to the swap gate 111k, the control qubit and the target qubit are reversed as compared with the quantum circuit 114.

Two swap gates 111m and 111n for the qubit q₀ and the qubit q₁ are added to the sub-circuit 114h. In a CNOT gate 111o next to the swap gate 111n, the control qubit and the target qubit are reversed as compared with the quantum circuit 114.

A swap gate 111p between the qubit q₁ and the qubit q₂ is added to the sub-circuit 114i. In a CNOT gate 111q next to the swap gate 111p, a physical qubit Q₁ is a control qubit, and a physical qubit Q₂ is a target qubit. An X gate 111r and a Hadamard gate 111s of the partial circuit 111i are made to operate on the physical qubit Q₀. A Z-gate 111t and a Hadamard gate 111u of the partial circuit 111i are made to operate on the physical qubit Q₁.

The sub-circuit evaluation unit 132 generates k allocation patterns indicated by a parameter group for generating a corrected quantum circuit as illustrated in FIG. 23. With respect to the allocation pattern "Mₖ" (Mₖ ∈ M) of the parameter group, the sub-circuit evaluation unit 132 evaluates the number of all-zero sequences as follows.

With respect to the measurement results obtained when "c'₁c'₁^{†}" is executed a plurality of times, the sub-circuit evaluation unit 132 computes an average value of the number of times that |0 ... 0> is satisfied, and sets it as zₖ₁.

With respect to each "c'ᵢ" (i ∈{2, ..., and N}), the sub-circuit evaluation unit 132 executes the following 1. and 2. 1. The sub-circuit evaluation unit 132 randomly generates a plurality of circuits "vector rᵢ = {rᵢ₁, rᵢ₂, ..., and rᵢₙ}". 2. By executing each of the elements of {rᵢ₁c'ᵢc'ᵢ^{†}rᵢ₁^{†}, n₂c'ᵢc'ᵢ^{†}rᵢ₂^{†}, ..., and rᵢₙc'ᵢc'ᵢ^{†}rᵢₙ^{†}} a plurality of times, the sub-circuit evaluation unit 132 computes an average value of the number of times that |0 ... 0> is satisfied, and sets it as "zₖᵢ".

The sub-circuit evaluation unit 132 outputs the allocation pattern "Mₖ" with which "Σᵢzₖᵢ" is minimized as the optimum allocation.

Next, a procedure of parameter optimization processing of optimizing initial allocation and routing of physical qubits will be described in detail.

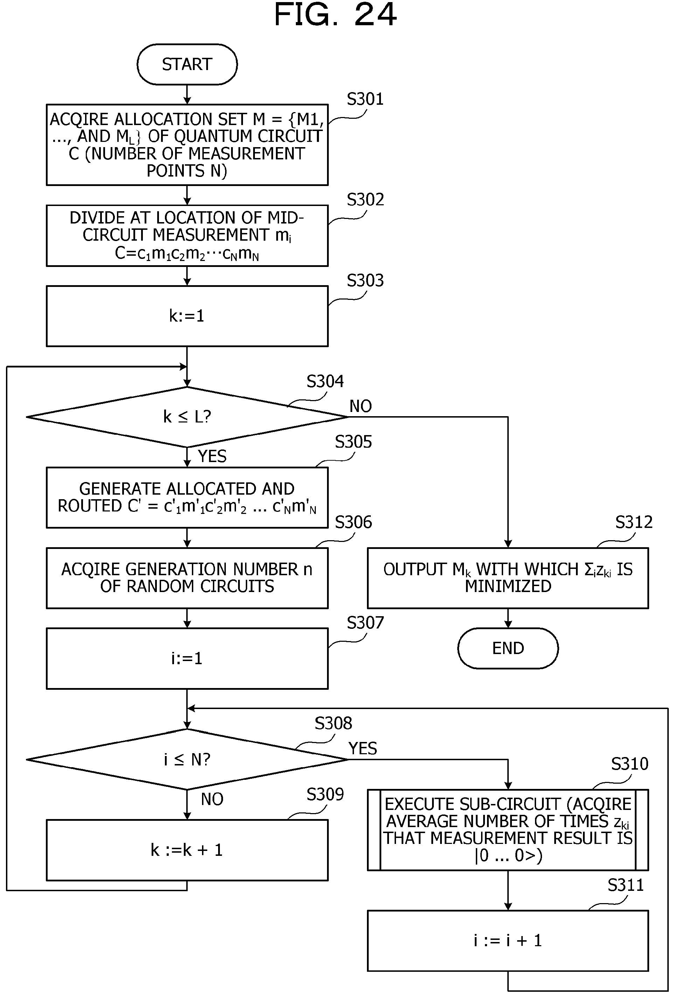

FIG. 24 is a flowchart illustrating an example of a procedure of the parameter optimization processing of optimizing initial allocation and routing of physical qubits. Hereinafter, the processing illustrated in FIG. 24 will be described in accordance with step numbers.

[Step S301] The quantum circuit division unit 131 acquires a quantum circuit C in which the number of measurement points is N and an allocation set "M = {M₁, M₂, ..., and M_{L}}" of the quantum circuit C. For example, the quantum circuit division unit 131 reads the quantum circuit C and the allocation set M stored in advance in the storage unit 110 from the storage unit 110.

[Step S302] The quantum circuit division unit 131 divides the quantum circuit C at the location of the mid-circuit measurement "mᵢ". With this, "C = c₁m₁c₂m₂ ... c_{N}m_{N}" is obtained.

[Step S303] The sub-circuit evaluation unit 132 sets the variable k to "1" (k: = 1).

[Step S304] The sub-circuit evaluation unit 132 determines whether or not the value of the variable k is equal to or smaller than the number L of allocation patterns. When the value of k is equal to or smaller than L, the sub-circuit evaluation unit 132 advances the processing to step S305. When the value of k exceeds L, the sub-circuit evaluation unit 132 advances the processing to step S312.

[Step S305] By applying a k-th allocation pattern "Mₖ" to the acquired quantum circuit "C = c₁m₁c₂m₂ ... c_{N}m_{N}", the sub-circuit evaluation unit 132 generates a quantum circuit "C' = c'₁m'₁c'₂m'₂ ... c'_{N}m'_{N}" in which the physical qubits have been allocated and routed.

[Step S306] The sub-circuit evaluation unit 132 acquires the generation number of random circuits "n". For example, the sub-circuit evaluation unit 132 reads the generation number "n" set in advance by the user from the memory 102 or the storage device 103.

[Step S307] The sub-circuit evaluation unit 132 sets the variable i to "1".

[Step S308] The sub-circuit evaluation unit 132 determines whether or not the value of the variable i is equal to or smaller than N. When the value of i is equal to or smaller than N, the sub-circuit evaluation unit 132 advances the processing to step S310. When the value of i exceeds N, the sub-circuit evaluation unit 132 advances the processing to step S309.

[Step S309] The sub-circuit evaluation unit 132 adds "1" to k, and advances the processing to step S304.

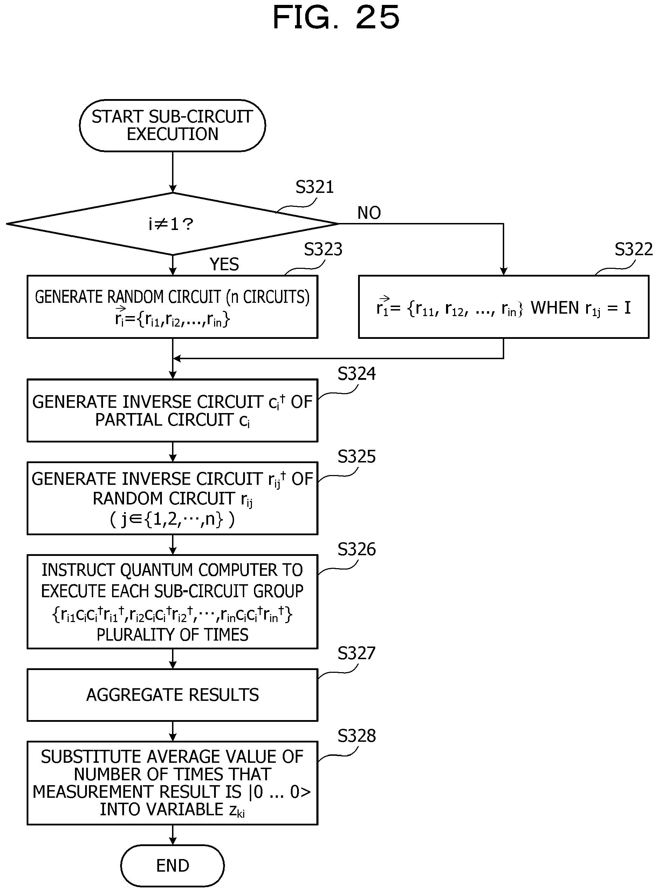

[Step S310] The sub-circuit evaluation unit 132 performs sub-circuit execution processing. Details of the sub-circuit execution processing will be described later (see FIG. 25). By the sub-circuit execution processing, the average number of times "zₖⱼ" that the measurement result is |0 ... 0> in the i-th sub-circuit execution processing to which the k-th allocation pattern "Mₖ" is applied is obtained.

[Step S311] The sub-circuit evaluation unit 132 adds "1" to the variable i, and advances the processing to step S308.

[Step S312] The sub-circuit evaluation unit 132 outputs "Mₖ" with which a sum "Σᵢzₖᵢ" of "zₖᵢ" for each allocation pattern is minimized.

"Mₖ" output in this manner is an allocation pattern of physical qubits with the lowest probability of error occurrence.

FIG. 25 is a flowchart illustrating an example of a procedure of the sub-circuit execution processing. Hereinafter, of the processing illustrated in FIG. 25, the processing in steps S321 to S327 is the same as the processing in steps S121 to S127 illustrated in FIG. 18, respectively.

In step S328, the sub-circuit evaluation unit 132 obtains an average value of the number of times that the measurement result after the execution of each of the sub-circuits a plurality of times is |0 ... 0>. The sub-circuit evaluation unit 132 substitutes the obtained average value into the variable "zₖᵢ".

With the above-described configuration, even in a case where the parameter group is not able to be divided for each sub-circuit, it is possible to calculate the parameter group (allocation pattern of physical qubits and routing) in which the error occurrence rate for each sub-circuit is the lowest.

### [Other Embodiments]

While the quantum circuit division unit 131 divides the quantum circuit at the mid-circuit measurement point in the second to fourth embodiments, the quantum circuit division unit 131 may divide the quantum circuit at a point other than the mid-circuit measurement point. When, for example, the number of quantum gates in a portion between measurements is large, the quantum circuit division unit 131 may perform optimization by dividing more finely. With this, for example, depths of some of the sub-circuits may be suppressed from becoming too deep, and the sub-circuits may be accurately evaluated.

## Claims

1. A quantum computation support program causing a computer to execute a process comprising:
dividing a quantum circuit to be executed by a quantum computer into a plurality of partial circuits;
generating, with respect to each of the plurality of partial circuits, a sub-circuit obtained by adding, after the partial circuit, an inverse circuit that causes the quantum computer to execute an inverse arithmetic operation of an arithmetic operation of the partial circuit;
setting, with respect to each of a plurality of candidate values of a parameter set for causing the quantum computer to execute the quantum circuit, the candidate value as the parameter, and causing the quantum computer to execute the sub-circuit generated from each of the plurality of partial circuits a plurality of times; and
determining, based on a comparison result between an input state and an output state when the sub-circuit is executed, a value to be set as the parameter in the execution of the quantum circuit from among the plurality of candidate values.

2. The quantum computation support program according to claim 1, wherein
in the dividing the quantum circuit, the quantum circuit is divided at a position of mid-circuit measurement where measurement other than the output state is performed.

3. The quantum computation support program according to claim 1, wherein
in the determining the value to be set as the parameter, the value to be set as the parameter in the execution of the quantum circuit is determined based on a probability that the input state and the output state coincide with each other when the sub-circuit is executed, for each of the plurality of candidate values.

4. The quantum computation support program according to claim 1, wherein
in the determining the value to be set as the parameter, a value to be set as the parameter used for execution of a first partial circuit is determined based on a comparison result between the input state and the output state when the sub-circuit generated from the first partial circuit is executed.

5. The quantum computation support program according to claim 1, wherein
in the generating the sub-circuit, a plurality of sub-circuits obtained by adding a random circuit that generates a random initial state of a qubit based on a second partial circuit of which an execution order in the quantum circuit is a second or later before the second partial circuit, adding a first inverse circuit that indicates an inverse arithmetic operation of an arithmetic operation of the second partial circuit after the second partial circuit, and adding a second inverse circuit that indicates an inverse arithmetic operation of an arithmetic operation of the added random circuit after the first inverse circuit are generated.

6. The quantum computation support program according to claim 4, wherein
in the generating the sub-circuit,
the quantum computer is instructed to execute the quantum circuit a plurality of times up to a third partial circuit of which an execution order in the quantum circuit is i-th (i is a natural number),
a distribution of the output states by the plurality of times of executions is acquired,
when the sub-circuit of a fourth partial circuit of which an execution order in the quantum circuit is an (i + 1)th is generated, a distribution of initial states obtained by a generated random circuit and the acquired distribution of the output states are compared, and whether or not the generated random circuit is adopted is determined based on a comparison result, and
when it is determined to adopt the generated random circuit, the sub-circuit to which the generated random circuit is added is generated.

7. The quantum computation support program according to claim 1, wherein
in the causing the quantum computer to execute the sub-circuit a plurality of times, a plurality of combination patterns in which the candidate values of each of a plurality of the parameters set at a time of execution of the quantum circuit are combined are generated, and for each of the plurality of combination patterns, the quantum computer is caused to execute the sub-circuit of each of the plurality of partial circuits a plurality of times by using the plurality of parameters for which the candidate values indicated by the combination pattern are set, and
in the determining the value set as the parameter, a combination pattern that indicates the value to be set as the parameter at the time of execution of the quantum circuit is determined from among the plurality of combination patterns based on the comparison result between the input state and the output state at the time of execution of the sub-circuit for each of the plurality of combination patterns.

8. The quantum computation support program according to claim 1, wherein
the value of the parameter is a value that indicates an execution timing for a quantum gate that has a degree of freedom within a predetermined range in the execution timing.

9. The quantum computation support program according to claim 1, wherein
the value of the parameter is a value that indicates an allocation pattern of physical qubits of the quantum computer to the qubits included in the quantum circuit.

10. A quantum computation support method implemented by a computer, the quantum computation support method comprising:
dividing a quantum circuit to be executed by a quantum computer into a plurality of partial circuits;
generating, with respect to each of the plurality of partial circuits, a sub-circuit obtained by adding, after the partial circuit, an inverse circuit that causes the quantum computer to execute an inverse arithmetic operation of an arithmetic operation of the partial circuit;
setting, with respect to each of a plurality of candidate values of a parameter set for causing the quantum computer to execute the quantum circuit, the candidate value as the parameter, and causing the quantum computer to execute the sub-circuit generated from each of the plurality of partial circuits a plurality of times; and
determining, based on a comparison result between an input state and an output state when the sub-circuit is executed, a value to be set as the parameter in the execution of the quantum circuit from among the plurality of candidate values.

11. An information processing apparatus comprising:
a processing unit configured to
divide a quantum circuit to be executed by a quantum computer into a plurality of partial circuits,
generate, with respect to each of the plurality of partial circuits, a sub-circuit obtained by adding, after the partial circuit, an inverse circuit that causes the quantum computer to execute an inverse arithmetic operation of an arithmetic operation of the partial circuit,
set, with respect to each of a plurality of candidate values of a parameter set for causing the quantum computer to execute the quantum circuit, the candidate value as the parameter, and causing the quantum computer to execute the sub-circuit generated from each of the plurality of partial circuits a plurality of times, and
determine, based on a comparison result between an input state and an output state when the sub-circuit is executed, a value to be set as the parameter in the execution of the quantum circuit from among the plurality of candidate values.

## Patentansprüche

1. Quantenberechnungsunterstützungsprogramm, das einen Computer veranlasst, einen Prozess auszuführen, umfassend:
Aufteilen einer von einem Quantencomputer auszuführenden Quantenschaltung in eine Vielzahl von Teilschaltungen;
Erzeugen, in Bezug auf jede der Vielzahl von Teilschaltungen, einer Unterschaltung, die dadurch erhalten wird, dass nach der Teilschaltung eine inverse Schaltung hinzugefügt wird, die den Quantencomputer veranlasst, eine inverse arithmetische Operation einer arithmetischen Operation der Teilschaltung auszuführen;
Festlegen, in Bezug auf jeden einer Vielzahl von Kandidatenwerten eines Parametersatzes zum Veranlassen des Quantencomputers, die Quantenschaltung auszuführen, des Kandidatenwerts als den Parameter, und Veranlassen des Quantencomputers, die aus jeder der Vielzahl von Teilschaltungen erzeugte Unterschaltung mehrmals auszuführen; und
Bestimmen, auf der Grundlage eines Vergleichsergebnisses zwischen einem Eingangszustand und einem Ausgangszustand bei der Ausführung der Unterschaltung, eines Werts aus der Vielzahl von Kandidatenwerten, der bei der Ausführung der Quantenschaltung als der Parameter festzulegen ist.

2. Quantenberechnungsunterstützungsprogramm nach Anspruch 1, wobei
bei der Aufteilung der Quantenschaltung, die Quantenschaltung an einer Position einer Zwischenschaltungsmessung aufgeteilt wird, an der eine andere Messung als die des Ausgangszustands durchgeführt wird.

3. Quantenberechnungsunterstützungsprogramm nach Anspruch 1, wobei
bei der Bestimmung des als der Parameter festzulegenden Werts der bei der Ausführung der Quantenschaltung als der Parameter festzulegende Wert für jeden der Vielzahl von Kandidatenwerten auf der Grundlage einer Wahrscheinlichkeit bestimmt wird, mit der der Eingangszustand und der Ausgangszustand bei der Ausführung der Unterschaltung miteinander übereinstimmen.

4. Quantenberechnungsunterstützungsprogramm nach Anspruch 1, wobei
bei der Bestimmung des als der Parameter festzulegenden Werts ein Wert, der als der Parameter für die Ausführung einer ersten Teilschaltung festzulegen ist, auf der Grundlage eines Vergleichsergebnisses zwischen dem Eingangszustand und dem Ausgangszustand bestimmt wird, wenn die aus der ersten Teilschaltung erzeugte Unterschaltung ausgeführt wird.

5. Quantenberechnungsunterstützungsprogramm nach Anspruch 1, wobei
beim Erzeugen der Unterschaltung eine Vielzahl von Unterschaltungen erzeugt werden, die erhalten werden durch Hinzufügen einer Zufallsschaltung, die einen zufälligen Anfangszustand eines Qubits auf der Grundlage einer zweiten Teilschaltung erzeugt, deren Ausführungsreihenfolge in der Quantenschaltung eine zweite oder spätere vor der zweiten Teilschaltung ist, Hinzufügen einer ersten inversen Schaltung, die eine inverse arithmetische Operation einer arithmetischen Operation der zweiten Teilschaltung nach der zweiten Teilschaltung angibt, und Hinzufügen einer zweiten inversen Schaltung, die eine inverse arithmetische Operation einer arithmetischen Operation der hinzugefügten Zufallsschaltung nach der ersten inversen Schaltung angibt.

6. Quantenberechnungsunterstützungsprogramm nach Anspruch 4, wobei
beim Erzeugen der Unterschaltung,
der Quantencomputer angewiesen wird, die Quantenschaltung mehrmals bis zu einer dritten Teilschaltung auszuführen, deren Ausführungsreihenfolge in der Quantenschaltung die i-te ist (i ist eine natürliche Zahl),
eine Verteilung der Ausgangszustände aus der Vielzahl von Malen der Ausführungen erfasst wird,
wenn die Unterschaltung einer vierten Teilschaltung erzeugt wird, deren Ausführungsreihenfolge in der Quantenschaltung die (i + 1)-te ist, eine durch eine erzeugte Zufallsschaltung erhaltene Verteilung der Anfangszustände und die erfasste Verteilung der Ausgangszustände verglichen werden und auf der Grundlage eines Vergleichsergebnisses bestimmt wird, ob die erzeugte Zufallsschaltung angenommen wird oder nicht, und
wenn bestimmt wird, die erzeugte Zufallsschaltung anzunehmen, wird die Unterschaltung erzeugt, der die erzeugte Zufallsschaltung hinzugefügt wird.

7. Quantenberechnungsunterstützungsprogramm nach Anspruch 1, wobei
beim Veranlassen des Quantencomputers, die Unterschaltung mehrmals auszuführen, eine Vielzahl von Kombinationsmustern erzeugt wird, in denen die Kandidatenwerte jedes einer Vielzahl von Parametern, die zum Zeitpunkt der Ausführung der Quantenschaltung festgelegt werden, kombiniert werden, und für jedes der Vielzahl von Kombinationsmustern der Quantencomputer veranlasst wird, die Unterschaltung jeder der Vielzahl von Teilschaltungen mehrmals auszuführen, indem die Vielzahl von Parametern verwendet werden, für die die durch das Kombinationsmuster angegebenen Kandidatenwerte festgelegt sind, und
beim Bestimmen des als den Parameter festgelegten Werts aus der Vielzahl von Kombinationsmustern ein Kombinationsmuster bestimmt wird, das den zum Zeitpunkt der Ausführung der Quantenschaltung als den Parameter festzulegenden Wert angibt, und zwar auf der Grundlage des Vergleichsergebnisses zwischen dem Eingangszustand und dem Ausgangszustand zum Zeitpunkt der Ausführung der Unterschaltung für jedes der Vielzahl von Kombinationsmustern.

8. Quantenberechnungsunterstützungsprogramm nach Anspruch 1, wobei
der Wert des Parameters ein Wert ist, der einen Ausführungszeitpunkt für ein Quantengatter angibt, dessen Freiheitsgrad hinsichtlich des Ausführungszeitpunkts innerhalb eines vorbestimmten Bereichs liegt.

9. Quantenberechnungsunterstützungsprogramm nach Anspruch 1, wobei
der Wert des Parameters ein Wert ist, der ein Zuordnungsmuster physikalischer Qubits des Quantencomputers zu den in der Quantenschaltung eingeschlossenen Qubits angibt.

10. Quantenberechnungsunterstützungsverfahren, das von einem Computer implementiert wird, wobei das Quantenberechnungsunterstützungsverfahren umfasst:
Aufteilen einer von einem Quantencomputer auszuführenden Quantenschaltung in eine Vielzahl von Teilschaltungen;
Erzeugen, in Bezug auf jede der Vielzahl von Teilschaltungen, einer Unterschaltung, die dadurch erhalten wird, dass nach der Teilschaltung eine inverse Schaltung hinzugefügt wird, die den Quantencomputer veranlasst, eine inverse arithmetische Operation einer arithmetischen Operation der Teilschaltung auszuführen;
Festlegen, in Bezug auf jeden einer Vielzahl von Kandidatenwerten eines Parametersatzes, zum Veranlassen des Quantencomputers, die Quantenschaltung auszuführen, des Kandidatenwerts als den Parameter, und Veranlassen des Quantencomputers, die aus jeder der Vielzahl von Teilschaltungen erzeugte Unterschaltung mehrmals auszuführen; und
Bestimmen, auf der Grundlage eines Vergleichsergebnisses zwischen einem Eingangszustand und einem Ausgangszustand bei der Ausführung der Unterschaltung, eines Werts aus der Vielzahl von Kandidatenwerten, der bei der Ausführung der Quantenschaltung als der Parameter festzulegen ist.

11. Informationsverarbeitungseinrichtung, umfassend:
eine Verarbeitungseinheit, die so ausgebildet ist, dass sie
eine von einem Quantencomputer auszuführende Quantenschaltung in eine Vielzahl von Teilschaltungen aufteilt,
in Bezug auf jede der Vielzahl von Teilschaltungen eine Unterschaltung erzeugt, die dadurch erhalten wird, dass nach der Teilschaltung eine inverse Schaltung hinzugefügt wird, die den Quantencomputer veranlasst, eine inverse arithmetische Operation einer arithmetischen Operation der Teilschaltung auszuführen,
in Bezug auf jeden einer Vielzahl von Kandidatenwerten eines Parametersatzes zum Veranlassen des Quantencomputers, die Quantenschaltung auszuführen, den Kandidatenwert als den Parameter festlegt und den Quantencomputer veranlasst, die aus jeder der Vielzahl von Teilschaltungen erzeugte Unterschaltung mehrmals auszuführen, und
auf der Grundlage eines Vergleichsergebnisses zwischen einem Eingangszustand und einem Ausgangszustand bei der Ausführung der Unterschaltung einen Wert aus der Vielzahl von Kandidatenwerten bestimmt, der bei der Ausführung der Quantenschaltung als der Parameter festzulegen ist.

## Revendications

1. Programme de support de calcul quantique amenant un ordinateur à mettre en œuvre un procédé comprenant:
la division d'un circuit quantique à mettre en œuvre par un ordinateur quantique en une pluralité de circuits partiels ;
la génération, pour chacun de la pluralité de circuits partiels, d'un sous-circuit obtenu par addition, après le circuit partiel, d'un circuit inverse qui amène l'ordinateur quantique à mettre en œuvre un fonctionnement arithmétique inverse d'un fonctionnement arithmétique du circuit partiel ;
le réglage, pour chacune d'une pluralité de valeurs candidates d'un ensemble de paramètres pour amener l'ordinateur quantique à mettre en œuvre le circuit quantique, la valeur candidate comme étant le paramètre, et amener l'ordinateur quantique à mettre en œuvre le sous-circuit généré à partir de chacun de la pluralité de circuits partiels une pluralité de fois ; et
la détermination, sur la base d'un résultat de comparaison entre un état d'entrée et un état de sortie lorsque le sous-circuit est mis en œuvre, d'une valeur à régler comme étant le paramètre dans la mise en œuvre du circuit quantique parmi la pluralité de valeurs candidates.

2. Programme de support de calcul quantique selon la revendication 1, dans lequel
dans la division du circuit quantique, le circuit quantique est divisé à une position de mesure intermédiaire de circuit où est réalisée une mesure autre que l'état de sortie.

3. Programme de support de calcul quantique selon la revendication 1, dans lequel
dans la détermination de la valeur à régler comme étant le paramètre, la valeur à régler comme étant le paramètre dans la mise en œuvre du circuit quantique est déterminée sur la base d'une probabilité que l'état d'entrée et l'état de sortie coïncident l'un avec l'autre lorsque le sous-circuit est mis en œuvre, pour chacune de la pluralité de valeurs candidates.

4. Programme de support de calcul quantique selon la revendication 1, dans lequel
dans la détermination de la valeur à régler comme étant le paramètre, une valeur à régler comme étant le paramètre utilisé pour la mise en œuvre d'un premier circuit partiel est déterminée sur la base d'un résultat de comparaison entre l'état d'entrée et l'état de sortie lorsque le sous-circuit généré à partir du premier circuit partiel est mis en œuvre.

5. Programme de support de calcul quantique selon la revendication 1, dans lequel
dans la génération du sous-circuit, une pluralité de sous-circuits obtenus par l'ajout d'un circuit aléatoire qui génère un état initial aléatoire d'un qubit sur la base d'un deuxième circuit partiel dont un ordre de mise en œuvre dans le circuit quantique est un deuxième ordre ou un ordre ultérieur avant le deuxième circuit partiel, l'ajout d'un premier circuit inverse qui indique un fonctionnement arithmétique inverse d'un fonctionnement arithmétique du deuxième circuit partiel après le deuxième circuit partiel, et l'ajout d'un deuxième circuit inverse qui indique un fonctionnement arithmétique inverse d'un fonctionnement arithmétique du circuit aléatoire ajouté après le premier circuit inverse sont générés.

6. Programme de support de calcul quantique selon la revendication 4, dans lequel
dans la génération du sous-circuit,
l'ordinateur quantique reçoit instruction de mettre en œuvre le circuit quantique une pluralité de fois jusqu'à un troisième circuit partiel dont un ordre de mise en œuvre dans le circuit quantique est le i-ème (i étant un nombre naturel),
une distribution des états de sortie par la pluralité de fois de mise en œuvre est acquise,
lorsque le sous-circuit d'un quatrième circuit partiel dont un ordre de mise en œuvre dans le circuit quantique est un (i + 1)-ème est généré, une distribution d'états initiaux obtenus par un circuit aléatoire généré et la distribution acquise des états de sortie sont comparées, et la connaissance si le circuit aléatoire généré est adopté ou non est déterminée sur la base d'un résultat de comparaison, et
lorsqu'il est déterminé d'adopter le circuit aléatoire généré, le sous-circuit auquel le circuit aléatoire généré est ajouté est généré.

7. Programme de support de calcul quantique selon la revendication 1, dans lequel
dans l'action d'amener l'ordinateur quantique à mettre en œuvre le sous-circuit une pluralité de fois, une pluralité de schémas de combinaison dans lesquels les valeurs candidates de chacun d'une pluralité des paramètres réglés à un instant de mise en œuvre du circuit quantique sont combinées sont générés, et pour chacun de la pluralité de schémas de combinaison, l'ordinateur quantique est amené à mettre en œuvre le sous-circuit de chacun de la pluralité de circuits partiels une pluralité de fois en utilisant la pluralité de paramètres pour lesquels les valeurs candidates indiquées par le schéma de combinaison sont réglées, et
dans la détermination de la valeur réglée comme étant le paramètre, un schéma de combinaison qui indique la valeur à régler comme étant le paramètre au moment de la mise en œuvre du circuit quantique est déterminé parmi la pluralité de schémas de combinaison sur la base du résultat de comparaison entre l'état d'entrée et l'état de sortie au moment de la mise en œuvre du sous-circuit pour chacun de la pluralité de schémas de combinaison.

8. Programme de support de calcul quantique selon la revendication 1, dans lequel
la valeur du paramètre est une valeur qui indique un instant de mise en œuvre pour une porte quantique qui présente un degré de liberté à l'intérieur d'une plage prédéterminée dans l'instant de mise en œuvre.

9. Programme de support de calcul quantique selon la revendication 1, dans lequel
la valeur du paramètre est une valeur qui indique un schéma d'affectation de qubits physiques de l'ordinateur quantique aux qubits inclus dans le circuit quantique.

10. Procédé de support de calcul quantique mis en œuvre par un ordinateur, le procédé de support de calcul quantique comprenant :
la division d'un circuit quantique à mettre en œuvre par un ordinateur quantique en une pluralité de circuits partiels ;
la génération, pour chacun de la pluralité de circuits partiels, d'un sous-circuit obtenu par addition, après le circuit partiel, d'un circuit inverse qui amène l'ordinateur quantique à mettre en œuvre un fonctionnement arithmétique inverse d'un fonctionnement arithmétique du circuit partiel ;
le réglage, pour chacune d'une pluralité de valeurs candidates d'un ensemble de paramètres pour amener l'ordinateur quantique à mettre en œuvre le circuit quantique, la valeur candidate comme étant le paramètre, et amener l'ordinateur quantique à mettre en œuvre le sous-circuit généré à partir de chacun de la pluralité de circuits partiels une pluralité de fois ; et
la détermination, sur la base d'un résultat de comparaison entre un état d'entrée et un état de sortie lorsque le sous-circuit est mis en œuvre, d'une valeur à régler comme étant le paramètre dans la mise en œuvre du circuit quantique parmi la pluralité de valeurs candidates.

11. Appareil de traitement d'informations comprenant :
une unité de traitement configurée pour
la division d'un circuit quantique à mettre en œuvre par un ordinateur quantique en une pluralité de circuits partiels,
la génération, pour chacun de la pluralité de circuits partiels, d'un sous-circuit obtenu en ajoutant, après le circuit partiel, un circuit inverse qui amène l'ordinateur quantique à mettre en œuvre un fonctionnement arithmétique inverse d'un fonctionnement arithmétique du circuit partiel,
le réglage, pour chacune d'une pluralité de valeurs candidates d'un ensemble de paramètres pour amener l'ordinateur quantique à mettre en œuvre le circuit quantique, la valeur candidate comme étant le paramètre, et amener l'ordinateur quantique à mettre en œuvre le sous-circuit généré à partir de chacun de la pluralité de circuits partiels une pluralité de fois, et
la détermination, sur la base d'un résultat de comparaison entre un état d'entrée et un état de sortie lorsque le sous-circuit est mis en œuvre, une valeur à régler comme étant le paramètre dans la mise en œuvre du circuit quantique parmi la pluralité de valeurs candidates.
